(19) Europäisches Patentamt
European Patent Office
Office européen des brevets

(11) EP 0 731 648 B1

(12) **FASCICULE DE BREVET EUROPEEN**

(45) Date de publication et mention de la délivrance du brevet:
**26.03.2003 Bulletin 2003/13**

(21) Numéro de dépôt: **95932138.1**

(22) Date de dépôt: **05.10.1995**

(51) Int Cl.[7]: **A23L 1/226**, A23L 1/227, A23L 1/228

(86) Numéro de dépôt international:
**PCT/IB95/00837**

(87) Numéro de publication internationale:
**WO 96/010927 (18.04.1996 Gazette 1996/17)**

(54) **COMPOSITIONS AROMATISANTES ET PROCEDE D'AROMATISATION**

AROMAZUSAMMENSETZUNGEN UND AROMATISIERUNGSVERFAHREN

FLAVOURING COMPOSITIONS AND METHOD

(84) Etats contractants désignés:
**AT CH DE ES FR GB IT LI NL**

(30) Priorité: **07.10.1994 CH 301994**

(43) Date de publication de la demande:
**18.09.1996 Bulletin 1996/38**

(73) Titulaire: **FIRMENICH SA**
**1211 Genève 8 (CH)**

(72) Inventeurs:
- **VAN DEN OUWELAND, Godefridus**
  **CH-1232 Confignon (CH)**
- **BENZI, François**
  **CH-1203 Genève (CH)**
- **VAN BEEM, Nicole**
  **CH-1195 Dully (CH)**
- **VANRIETVELDE, Claude**
  **F-74160 Saint-Julien-en-Genevois (FR)**

(74) Mandataire:
**Salvaterra-Garcia, Maria de Lurdes et al**
**Firmenich SA**
**Département des Brevets**
**Case Postale 239**
**1211 Genève 8 (CH)**

(56) Documents cités:
**FR-A- 2 132 783** **FR-A- 2 132 784**
**LU-A- 67 424**

- **S.ARCTANDER 'Perfume and Flavor Chemicals' , S.ARCTANDER , MONTCLAIR,N,J,(U.S.A) volume II voir "2785:Pyruvic Acid"**
- **J.KAMSTEEG ET AL. 'E=eetbaar' , H.J.W.BECHT , AMSTERDAM pages 174-175 voir "620 L-glutaminezuur" et "621 Mononatriumglutamaat"**
- **JOURNAL OF DAIRY SCIENCE, vol. 42, CHAPAIGN, ILLINOIS US, pages 207-213, W.J.HARPER 'Our Industry today'**
- **CHEMICAL ABSTRACTS + INDEXES, vol. 78, no. 5, 5 Février 1973 COLUMBUS US, page 374 K.H.NEY ET AL. 'Flavor of Edelpilzkaese,a German blue mold cheese' & Z.LEBENSM.-UNTERS.FORSCH, vol. 149, no. 5, pages 275-279,**
- **T.E.FURIA ET AL. 'Fenaroli's Handbook of Flavor Ingredients' , CRC , BOCA RATON Second Edition volume 2 voir page 117,L-cysteine;page 221,L-glutamic acid;page 300,DL-isoleucine;page 317 L-leucine voir page 559 D,L-valine;pages 671 et 673 voir page 507 Pyruvic acid**
- **'Aldrich Flavors & Fragrances' , ALDRICH , MILWAUKEE,WISCONSIN page 41 voir w37230-7 2-oxobutyric acid**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

### Domaine technique

La présente invention a trait à l'industrie des arômes et plus particulièrement à l'utilisation d'α-céto-acides en tant qu'ingrédients aromatisants pour la préparation de compositions aromatisantes et/ou de produits alimentaires ou pharmaceutiques aromatisés.

Les α-céto-acides sont un groupe de composés obéissant à la formule générale

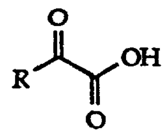

(I)

dans laquelle le symbole R peut représenter l'hydrogène ou une grande variété de radicaux alkyles, saturés ou insaturés, linéaires ou ramifiés, éventuellement substitués par des groupes hydroxy, amino, phenyl, hydroxy-phényl, carboxy, mercapto, méthylthio, guanidino et autres. On connaît actuellement plus d'une centaine de tels composés, et l'invention concerne plus particulièrement l'utilisation à titre d'ingrédient aromatisant d'un certain nombre de ces acides cités plus bas, lesquels sont comestibles.

### Technique antérieure

Une bonne partie de ces composés sont connus en tant que composants de produits naturels, dans lesquels ils se forment par fermentation d'acides aminés résultants de la transformation enzymatique de protéines. C'est ainsi que plusieurs de ces acides ont été trouvés, parmi d'autres, dans le cacao, dans plusieurs types de fromages (voir, par exemple, FR-A-2 132 783 ou FR-A-2 132 784) ou encore dans la bière.

On sait également que des α-céto-acides peuvent jouer un rôle déterminant dans le métabolisme des êtres vivants lorsqu'ils sont des précurseurs d'acides aminés essentiels et semi-essentiels, ce qui les rend utiles dans l'industrie pharmaceutique. Dans ce contexte, il est connu de les utiliser, par exemple, en tant que principes actifs de médicaments destinés au traitement de maladies rénales ou hépatiques. Leur emploi à cet effet présente cependant certains problèmes liés à leur odeur et goût désagréable (voir, par exemple, FR 2 419 723 et EP 406 811), ce qui a amené certains chercheurs à proposer des systèmes de support particuliers, par exemple des clathrates de cyclodextrine (EP 406 811), permettant de pallier ces problèmes.

Au vu de ce qui précède, il n'est peut-être pas surprenant de constater que, malgré les nombreux rapports dans l'art antérieur de l'occurrence naturelle de certains de ces céto-acides et de leur utilisation à des fins thérapeutiques, à notre connaissance, il n'a jamais été suggéré de les utiliser en tant qu'agents aromatisants actifs, pour améliorer le goût et l'arôme de produits alimentaires, en les ajoutant à ces produits à l'état essentiellement pur, c'est-à-dire libérés des substances pouvant les accompagner dans un produit naturel.

Or, nous avons maintenant découvert de façon surprenante que les composés susmentionnés sont des ingrédients aromatisants très avantageux, leur utilisation à cet effet se révélant être d'une portée très générale. Nous avons ainsi constaté que lorsque l'on ajoutait un ou plusieurs de ces composés à des compositions ou concentrés aromatisants de nature très variée, on améliorait de façon inattendue le goût desdites compositions et concentrés, notamment la sensation en bouche ou "mouthfeel" de ces produits, sans observer aucun effet organoleptique nocif, contrairement à ce à quoi l'on aurait pu s'attendre au vu de l'art antérieur.

### Exposé de l'invention

Ainsi, un premier objet de la présente invention est une composition aromatisante artificielle qui contient à titre d'ingrédient actif un ou plusieurs composés choisis dans le groupe constitué par les α-céto-acides à l'état essentiellement pur, ainsi que leurs dérivés et précurseurs comestibles pouvant se former desdits acides, respectivement libérer lesdits acides dans le milieu d'utilisation.

Par un α-céto-acide à l'état essentiellement pur on entend ici un α-céto-acide qui n'est pas accompagné des substances avec lesquelles il peut se trouver dans un produit naturel et dans les mêmes proportions.

Selon un mode d'exécution préférentielle de la composition aromatisante de l'invention, l'ingrédient actif est constitué par un ou plusieurs composés choisis dans le groupe formé par les acides glyoxylique, 2-oxo-propanoïque,

2-oxo-butanoique, 3-méthyl-2-oxo-butanoïque, 3-méthyl-2-oxo-pentanoïque, 4-méthyl-2-oxo-pentanoïque, 3-hydroxy-2-oxo-propanoïque, oxalacétique, 2-oxo-glutarique, 2-oxo-3-phényl-propanoïque, 3-(4-hydroxyphényl)-2-oxo-propanoïque, 2-oxo-1H-indole-3-propanoïque, 2-oxo-1H-imidazole-4-propanoïque, 4-méthylthio-2-oxo-butanoïque, 3-mercapto-2-oxo-propanoïque, 3-hydroxy-2-oxo-butanoïque, 6-amino-2-oxo-hexanoïque et 5-guanidino-2-oxo-pentanoïque, et par les dérivés et précurseurs comestibles de ces acides pouvant se former ou libérer ces derniers dans le milieu d'utilisation.

Par "milieu d'utilisation" on entend ici, soit le milieu de la composition aromatisante proprement dite, laquelle contiendra aussi typiquement un ou plusieurs ingrédients aromatisants courants d'origine naturelle ou synthétique, éventuellement en mélange avec les solvants et adjuvants usuels, soit le milieu du produit alimentaire ou pharmaceutique dans lequel cette composition aromatisante peut être incorporée. On comprend donc, qu'un tel milieu aura des caractéristiques physiques et chimiques, et notamment un pH, qui sont fonction de la nature des différents composants de la composition aromatisante ou des produits finis susmentionnés et qui peuvent conditionner la forme chimique dans laquelle l'α-céto-acide se trouve dans ledit milieu et déploie son effet organoleptique. On pense notamment à la possible formation d'hydrates en solution aqueuse ou encore aux dérivés pouvant résulter d'équilibres tautomériques de type céto-énol. Le groupe de composés pouvant constituer l'ingrédient actif de la composition aromatisante de l'invention inclut donc ces dérivés éventuels pouvant se former desdits α-céto-acides dans les conditions de leur utilisation.

De même, en tant que dérivés ou précurseurs comestibles des α-céto-acides dans le cadre de l'invention, on peut citer en particulier les sels comestibles de ces acides, par exemple, leurs sels de métaux alcalins tels que le sodium, lithium, magnésium, potassium ou calcium, ou encore leurs esters alkyliques de $C_1$ à $C_4$.

Par esters alkyliques de $C_1$ à $C_4$, on se réfère ici aux dérivés esters des acides susmentionnés dont la fonction ester possède un groupe alkyle saturé ou insaturé, linéaire ou ramifié, ayant de 1 à 4 atomes de carbone. Parmi d'autres, on peut citer notamment les esters méthyliques et éthyliques.

On peut citer encore, en tant que précurseurs comestibles des α-céto-acides, les acides aminés correspondants et notamment les acides aminés essentiels et leurs sels de métaux alcalins. Lorsqu'on se réfère ici à des acides aminés, on veut faire référence plus particulièrement aux énantiomères de ces acides ayant une configuration L, qui sont des composés d'occurrence naturelle.

L'addition selon l'invention des α-céto-acides et/ou leurs dérivés et précurseurs susmentionnés, à titre d'ingrédients actifs, aux compositions et concentrés aromatisants se traduit typiquement par une amélioration ou renforcement de l'impact et de la sensation riche, ample et crémeuse de ladite composition dans la bouche, c'est-à-dire des impressions gustatives liées à la consistance, volume et ampleur tels que perçus lors de la dégustation de ces produits et généralement désignées sous le terme de "sensation en bouche" ou "mouthfeel" du produit. Par ailleurs, ces effets peuvent être accompagnés d'autres effets aromatiques, notamment ceux liés aux notes volatiles responsables de l'odeur et du goût caractéristique d'un produit alimentaire déterminé, à l'aromatisation duquel la composition ou concentré se destine. Or, ce résultat est tout à fait surprenant, au vu des connaissances de l'art antérieur, en particulier en ce qui concerne les rapports dans la littérature ayant trait à l'occurrence de ces composés dans les fromages. Ces rapports suggèrent que lesdits composés peuvent avoir un rôle plus ou moins déterminant dans le goût du fromage selon la nature de ce dernier, sans toutefois définir ce rôle, mais ne les associent jamais aux caractéristiques des fromages qui ont trait à leur consistance et nature plus ou moins crémeuse et de type beurre, c'est-à-dire à leur "mouthfeel".

Par ailleurs, comme il ressort des exemples présentés plus loin, dans certaines applications, lors de l'utilisation de composés déterminés parmi ceux cités, on a observé une modification radicale des propriétés de la composition de base, avec une amélioration notable non seulement dans le "mouthfeel" de cette composition, son volume et son ampleur, mais aussi, ou plutôt, dans certaines notes aromatiques ayant une contribution de choix pour la valeur organoleptique de la composition.

Mais l'effet organoleptique de ces α-céto-acides et de leurs dérivés et précurseurs précités se révèle encore plus varié. Nous avons en effet constaté qu'ils pouvaient également renforcer la sensation gustative sucrée conférée par des édulcorants naturels ou artificiels. Ces composés sont, de ce fait, particulièrement utiles pour l'aromatisation d'aliments et boissons allégés en sucre, typiquement édulcorés à l'aide de substances artificielles telles que l'Aspartame® (Nutrasweet Co.), le Cyclamate de sodium (cyclohexylsulfamate de sodium), la Sucralose® (Tate & Lyle), la saccharine, l'Acesulfam® K (Hoechst Ag) ou autres.

Parmi les composés dont l'utilisation fait l'objet de l'invention, on peut citer encore à titre plus préférentiel l'acide 2-oxo-butanoïque, 3-méthyl-2-oxo-butanoïque, 3-hydroxy-2-oxo-propanoïque, 2-oxo-3-phényl-propanoïque, 3-méthyl-2-oxo-pentanoïque, 4-méthyl-2-oxo-pentanoïque, 4-méthylthio-2-oxo-butanoïque, 3-mercapto-2-oxo-propanoïque ou 2-oxo-1H-indole-3-propanoïque, ainsi que leurs dérivés et précurseurs pouvant se former ou libérer ces acides dans le milieu d'utilisation.

Selon un mode d'exécution préféré de l'invention, les α-céto-acides mentionnés plus haut sont utilisés en mélange avec au moins un acide aminé sélectionné dans le groupe constitué par l'acide 2-amino-butanoïque, la glycine,

l'α-alanine, la norvaline, la valine, l'acide aspartique, la norleucine, la leucine, l'isoleucine, la sérine, la thréonine, l'acide glutamique, la phénylalanine, la tyrosine, la cystéine, la méthionine, la glutamine, la théanine (N-éthylglutamine), l'asparagine, la cystine, la citrulline, l'acide γ-méthylène-glutamique, la lysine, le tryptophane, l'histidine, l'arginine et leurs sels de métaux alcalins, pour la préparation des compositions aromatisantes de l'invention.

Nous avons ainsi constaté un effet synergique lorsque l'α-céto-acide était utilisé en mélange avec, notamment, l'α-amino-acide correspondant, ce dernier pouvant renforcer l'effet organoleptique de l'α-céto-acide.

De préférence, ces compositions aromatisantes contiennent l'acide aminé susmentionné dans une proportion pondérale comprise entre 0,5 et 5, et plus préférentiellement 0,5 et 2 fois celle de l'α-céto-acide. D'une façon générale, le poids global des acides aminés, lorsqu'il y en a plusieurs, par rapport à celui de l'α-céto-acide, ou du mélange d'α-céto-acides présents, se trouvera dans les proportions relatives indiquées.

Les proportions dans lesquelles les ingrédients actifs susmentionnés, à savoir les α-céto-acides et leurs dérivés et précurseurs comestibles précités, sont présents dans les compositions aromatisantes de l'invention peuvent varier dans une gamme de valeurs étendue qui dépend de la nature des autres ingrédients dans ladite composition ainsi que de l'effet organoleptique que l'on prétend obtenir. A titre d'exemple, on peut citer typiquement des concentrations d'ingrédient actif de l'ordre de 0,01 à 10% en poids, ou même plus, par rapport au poids de la composition.

Un autre objet de l'invention est un procédé pour la préparation d'une composition aromatisante telle que décrite auparavant, caractérisé en ce qu'on ajoute à un mélange d'un ou plusieurs ingrédients aromatisants d'origine naturelle ou synthétique avec des solvants ou adjuvants courants, un ingrédient actif choisi dans le groupe constitué par les α-céto-acides, leurs dérivés et précurseurs comestibles définis plus haut, ou encore les mélanges de deux ou plusieurs de ces composés.

Selon un mode d'exécution particulier de ce procédé, ledit ingrédient actif comprend un ou plusieurs α-céto-acides obtenus par transformation enzymatique des α-amino-acides correspondants, à l'aide d'un système enzymatique capable de convertir, du moins partiellement, ces derniers en les α-céto-acides correspondants.

Selon un mode d'exécution encore plus particulier de ce procédé, lesdits α-amino-acides sont sélectionnés dans le groupe constitué par l'acide 2-amino-butanoïque, la glycine, l'α-alanine, la norvaline, la valine, l'acide aspartique, la norleucine, la leucine, l'isoleucine, la sérine, la thréonine, l'acide glutamique, la phénylalanine, la tyrosine, la cystéine, la méthionine, la lysine, le tryptophane, l'histidine, l'arginine, l'asparagine, la glutamine, la cystine, la citrulline, la théanine, l'acide γ-méthylène-glutamique et leurs sels, notamment ceux de métaux alcalins.

Par ingrédients aromatisants on entend ici des huiles essentielles d'origine naturelle ou synthétique d'usage courant dans l'aromatisation de produits alimentaires et dont on trouve maints exemples dans des textes de référence tels que, par exemple, l'oeuvre de P. Z. Bedoukian, Perfumery & Flavouring Synthetics, 2nd ed., Elsevier, Hollande (1967), ou encore Fenaroli's Handbook of Flavor Ingredients, 2nd ed., CRC Press, USA (1975). Bien entendu, des extraits ou concentrés de substances aromatisantes, obtenues à partir de fruits ou plantes, de lait, de fromages ou autres produits dérivés du lait, sont également des exemples d'ingrédients aromatisants.

Parmi les solvants et adjuvants d'usage plus courant on peut citer, à titre d'exemple, la triacétine, l'alcool éthylique ou le propylène glycol, ou encore des supports solides tels qu'une dextrine ou la gomme arabique.

Les compositions aromatisantes selon l'invention peuvent être utilisées pour modifier et/ou améliorer le goût d'une grande variété d'aliments et boissons, ainsi que de préparations pharmaceutiques, et ces produits finis font également l'objet de l'invention. On peut citer à titre d'exemple les margarines et beurres ainsi que les yoghourts, les glaces et crèmes glacées, les fromages, le lait et les produits à base de lait ou de dérivés de celui-ci, y compris des boissons, mais aussi des produits alimentaires tels que des plats cuisinés prêts à consommer, des soupes, des sauces, des biscuits doux ou salés, des amuse-gueules, en particulier des chips, et encore des desserts. L'utilisation de ces compositions pour l'aromatisation de boissons se révèle également avantageuse, notamment dans les boissons gazeuses tels que celles à base de cola, les limonades et autres.

La proportion dans laquelle ces compositions aromatisantes peuvent être ajoutées aux produits alimentaires cités peuvent être très variables, vu qu'elles sont fonction de la nature du produit que l'on veut aromatiser et de l'effet organoleptique désiré. L'homme de l'art est d'ailleurs à même de choisir ces concentrations en fonction de ces paramètres, et d'autres qui puissent se révéler pertinents lors de l'utilisation des compositions aromatisantes. A titre indicatif, les compositions peuvent être utilisées dans des proportions telles que la concentration d'ingrédient actif, à savoir l'α-céto-acide et/ou ses dérivés et précurseurs, ou leurs mélanges, dans le produit fini varie typiquement entre 0,001 et 10 ppm, voire même 20 ppm ou plus, en poids, par rapport au poids dudit produit fini. Plus préférentiellement, cette concentration sera comprise entre 0,01 et 5 ppm.

Comme il a été cité plus haut, les compositions aromatisantes de l'invention se révèlent particulièrement utiles pour améliorer ou augmenter la sensation en bouche ou "mouthfeel" des aliments et boissons dans lesquels elles sont incorporées.

Plus particulièrement, tous les produits alimentaires à faible teneur en graisses, dits allégés ("light") ou à basses calories, peuvent être améliorés, du point de vue de leur consistance et de la sensation en bouche, à l'aide de la composition aromatisante selon l'invention. L'aromatisation de ces produits présente une difficulté particulière dans

la mesure où, bien que l'on puisse compenser de façon plus ou moins adéquate les notes gustatives caractéristiques des matières grasses en ajoutant des ingrédients aromatisants appropriés, il reste le problème de la difficulté à reproduire, dans le produit allégé, la sensation en bouche ou "mouthfeel" et la consistance de type crémeux qui sont justement imparties par lesdites matières grasses. Ce problème est particulièrement aigu dans les produits laitiers et dans les margarines allégées, pour lesquels les compositions aromatisantes selon l'invention sont d'un usage très avantageux.

D'autre part, comme il a été cité auparavant, nous avons également constaté que les α-céto-acides, et/ou leurs dérivés et précurseurs décrits plus haut, ainsi que les compositions aromatisantes les contenant, sont particulièrement utiles pour l'aromatisation d'aliments et boissons allégés en sucre, et notamment ceux édulcorés à l'Aspartame®, au Cyclamate de sodium, à l'Acesulfam® K, à la Sucralose®, ou encore à l'aide de mélanges de deux ou plusieurs de ces composés. On a observé, en effet, que leur goût devenait plus sucré et plus proche de celui de l'aliment ou boisson équivalents normalement sucrés, c'est-à-dire plus naturel. Des effets encore plus remarquables dans ce domaine ont été constatés lorsqu'un α-céto-acide était ajouté en combinaison avec l'un des acides aminés cités plus haut, et notamment l'acide aminé correspondant. D'autre part ces composés renforcent également le pouvoir sucrant des sucres naturels tels que la saccharose, la fructose, la glucose, la maltose, etc, et ils permettent donc également de réduire la quantité de ces sucres dans les aliments édulcorés à l'aide de sucres naturels.

Il convient de noter que, dans l'aromatisation des produits alimentaires susmentionnés, on peut également utiliser les α-céto-acides et leurs dérivés et précurseurs cités plus haut, soit seuls, soit en solution dans des solvants d'usage courant dans l'art, sans les incorporer au préalable dans des compositions contenant d'autres ingrédients aromatisants. Ce sera notamment le cas lorsque l'un ou plusieurs desdits céto-acides se révèle efficace à la fois pour impartir le goût désiré et pour améliorer le caractère crémeux et ample de l'aliment, ou son caractère sucré.

Il est clair aussi que, soit ces composés, soit les compositions aromatisantes les contenant, peuvent être ajoutés aux aliments sous forme libre ou sous forme encapsulée, notamment atomisés ("spray-dried") à l'aide de matières d'encapsulation d'usage courant (protéines, gélatines, caséinates, hydrocolloïdes, dextrines, amidon et amidon modifié, maltodextrines, sucres, etc ...) et selon des méthodes d'encapsulation courantes.

En somme, la présente invention a aussi trait à un procédé pour impartir, améliorer ou modifier le goût et/ou l'arôme d'une composition aromatisante ou d'un produit alimentaire, caractérisé en ce qu'on ajoute à ladite composition ou audit produit une quantité organoleptiquement active d'un ou plusieurs composés choisis dans le groupe constitué par les α-céto-acides à l'état essentiellement pur, ainsi que leurs dérivés et précurseurs comestibles pouvant se former desdits acides, respectivement libérer lesdits acides, dans le milieu d'utilisation.

Il s'agit donc d'un procédé d'aromatisation très général permettant de préparer des aliments aromatisés de nature très variée et notamment des aliments d'origine naturelle, ou des extraits de ceux-ci, enrichis en les composés susmentionnés par addition de ces derniers selon le procédé de l'invention.

Selon des modes d'exécution préférés de ce procédé on ajoutera les α-céto-acides et/ou leurs dérivés et précurseurs spécifiques, ainsi que leurs mélanges, déjà cités à plusieurs reprises et décrits en détail dans les exemples qui suivent. Plus particulièrement, le procédé de l'invention permet d'améliorer le caractère gras, crémeux et riche, c'est-à-dire le "mouthfeel" de la composition ou du produit alimentaire. Selon un autre mode d'exécution, il permet de renforcer et rendre plus naturel le goût sucré de cette composition ou aliment ou de modifier son pouvoir édulcorant.

Selon encore d'autres modes d'exécution, il sert à conférer ou modifier le caractère organoleptique de la composition ou de l'aliment.

L'invention fournit donc des compositions aromatisantes et des procédés d'aromatisation capables d'impartir, améliorer ou renforcer les caractères organoleptiques généralement associés à la présence des matières grasses dans les aliments, notamment la consistance crémeuse, et la sensation en bouche ("mouthfeel") plus ample et volumineuse. Ainsi, les compositions selon l'invention peuvent remplacer totalement ou partiellement ces matières grasses dans une grande variété d'aliments allégés, mais elles peuvent également servir à renforcer les attributs organoleptiques de ces matières grasses dans les aliments qui en contiennent. Les aliments comprenant les compositions aromatisantes selon l'invention ont plus d'impact et un goût plus durable dans la bouche, ainsi qu'un meilleur "mouthfeel", que les aliments correspondants qui n'ont pas été aromatisés selon l'invention. De même, les produits alimentaires contenant du sucre ou ses remplaçants artificiels se trouvent améliorés lorsqu'on leur ajoute les α-céto-acides, leurs dérivés ou précurseurs cités, ou les compositions aromatisantes selon l'invention. D'une façon générale, les composés selon l'invention servent ainsi à modifier ou conférer les attributs organoleptiques de compositions aromatisantes et produits alimentaires de nature très variée.

Par ailleurs, et en plus des applications générales des ingrédients actifs de l'invention décrites jusqu'ici, nous avons également remarqué que l'effet organoleptique des α-céto-acides préférés, mentionnés plus haut, et de leurs mélanges avec les acides aminés correspondants, pouvait être nuancé, dans la mesure où l'un ou l'autre de ces composés se révélait d'une utilisation encore plus avantageuse pour certains types d'applications aromatiques plus spécifiques.

C'est ainsi que, par exemple, pour des applications de type viandeux, des effets particulièrement réussis ont

été obtenus avec les acides 2-oxo-butanoïque, oxalacétique, 3-méthyl-2-oxo-butanoïque, 3-méthyl-2-oxo-pentanoïque, 2-oxo-glutarique et 3-mercapto-2-oxo-propanoïque. Ces composés rendent le goût des arômes de type viande, notamment poulet, porc ou boeuf, plus rond et plus juteux, viandeux, et renforcent les notes rôties, grillées des compositions viandeuses, tout en augmentant l'intensité et la permanence de leur effet gustatif dans la bouche. Ces acides semblent avoir un effet particulièrement marqué sur les fractions phénolique, pyrazinique, soufrée et aldéhydée, ou encore sur les acides gras, des arômes de type viande. Dans ce contexte, sont préférées selon l'invention les compositions aromatisantes qui contiennent un ou plusieurs de ces acides, en combinaison avec un ou plusieurs composés choisis dans le groupe constitué par les isoeugénol, 2-propylphénol, p-vinylguaiacol, 2-acétylpyrazine, 2-éthyl-3,5-diméthylpyrazine, 2,3,5-triméthylpyrazine, 2,3-diéthyl-5-méthylpyrazine, 3-éthyl-2-méthylpyrazine, sulfure de diméthyle, disulfure de diméthyle, trisulfure de diméthyle, disulfure de méthylpropyle, 2-méthylthiophénol, méthional (3-méthylthiopropanal), 2-octénal, 2,4-nonadiénal, 2,4-décadiénal, 2,4-undécadiénal, 2-méthoxybenzaldéhyde, 2,4-dodécadiénal, décénal, 2-furanecarboxylate de méthyle, Furanéol® (4-hydroxy-2,5-diméthyl-3(2H)-furanone; origine : Firmenich SA, Genève, Suisse), 2-éthyl-4-hydroxy-3-méthyl-5(2H)-furanone (origine : Firmenich SA, Genève, Suisse), 2,6-diméthylbenzènethiol, 2-nonén-1-ol, acide 10-undécénoïque, acide undécanoïque, acide isodécanoïque et acide isononanoïque.

Parmi ces compositions aromatisantes, celles qui contiennent l'acide 3-mercapto-2-oxo-propanoïque, en combinaison avec l'un ou plusieurs des composés susmentionnés, se sont révélées particulièrement adaptées aux buts de l'invention.

On a constaté également que l'on pouvait obtenir un renforcement des notes rôties de ce type d'arômes lorsqu'on utilisait l'acide 2-oxo-butanoïque en combinaison avec un ou plusieurs composés choisis dans le groupe constitué par le 2-furanecarboxylate de méthyle, le Furanéol®, la 2-éthyl-3,5-diméthylpyrazine, le méthional, la 2-acétylpyrazine, la 2-éthyl-4-hydroxy-3-méthyl-5(2H)-furanone et les acides undécanoïque et 10-undécénoïque.

De même, l'acide 2-oxo-glutarique semble renforcer en particulier les notes grasses des arômes de viande et, à cet effet, il se révèle particulièrement utile lorsqu'employé en combinaison avec le 2-nonén-1-ol, le 2-décénal et/ou le 2,4-décadiénal. Des compositions aromatisantes ayant un goût plus riche et gras, aussi plus rôti, grillé et croustillant ont été obtenues, par exemple, en utilisant l'acide 3-méthyl-2-oxo-pentanoïque en combinaison avec un ou plusieurs composés parmi les acides iso-décanoïque, iso-nonanoïque, 10-undécénoïque et undécanoïque, le Furanéol®, la 2,3,5-triméthylpyrazine et la 2,3-diéthyl-5-méthylpyrazine.

Dans le domaine des applications de type légumineux, des effets particulièrement avantageux ont pu être obtenus avec les acides 2-oxo-butanoïque, 3-méthyl-2-oxo-butanoïque, 3-méthyl-2-oxo-pentanoïque ou encore 4-méthyl-2-oxo-pentanoïque. Par exemple, des effets enrichissants peuvent être obtenus dans les arômes de type tomate lorsqu'on utilise notamment l'acide 2-oxo-butanoïque en combinaison avec un ou plusieurs composés parmi les acides octanoïque, butyrique et isovalérianique, la 5-dodécanolide, le méthional et le sulfure de diméthyle. L'oxo-acide susmentionné renforce la rondeur et le caractère succulent imparti par ces composés à l'arôme de tomate. Quant à l'acide 3-méthyl-2-oxo-butanoïque, il a pour effet de renforcer l'impact et le caractère "cuit" de l'arôme, typiquement dû à des composés tels que le méthylmercaptan, le méthional, le sulfure de diméthyle, l'eugénol, le 5-méthylfurfural, la vanilline ou encore la 3,4-diméthyl-1,2-cyclopentanedione. L'acide 4-méthyl-2-oxo-pentanoïque, d'autre part, renforce les notes juteuses, viandeuses et succulentes et se combine bien, à cet effet, avec un ou plusieurs composés parmi les méthional, sulfure de diméthyle, eugénol, orthocrésol ou encore guaiacol, alors que l'acide 3-méthyl-2-oxo-pentanoïque peut améliorer la rondeur et l'impact des compositions et arômes contenant un ou plusieurs ingrédients choisis dans le groupe constitué par les composés soufrés cités ci-dessus, ainsi que par l'acétate d'isobutyle, l'hexanal et le 2-hexénal, le benzoate de linalyle, le caproate de linalyle et le 2-buténoate d'hexyle.

Dans les arômes de type asperge en particulier, il a été constaté que les acides 2-oxo-butanoïque, 3-méthyl-2-oxo-butanoïque et 3-méthyl-2-oxo-pentanoïque renforçaient les notes pyraziniques, boisées de l'arôme, et qu'ils rendaient ce type d'arôme plus crémeux et plus doux. L'acide oxalacétique d'autre part augmente l'impact de l'arôme en renforçant l'effet organoleptique de composés tels que le sulfure de diméthyle, le méthylmercaptan et le 2-méthyl-1-benzènethiol. D'autres $\alpha$-céto-acides ayant un effet positif sur ce type d'arôme sont cités dans les exemples.

D'autres effets avantageux ont pu être obtenus avec l'acide 3-méthyl-2-oxo-pentanoïque, en combinaison avec le méthylmercaptan, le sulfure de diméthyle et la 3-méthyl-3(5)-(méthylthio)pyrazine. Les compositions ainsi obtenues augmentaient notamment l'intensité et l'impact des arômes de type maïs. Pour ce type d'arômes, l'acide 3-méthyl-2-oxo-butanoïque se révèle également utile, notamment lorsqu'il est utilisé en combinaison avec des ingrédients soufrés tels que le sulfure de diméthyle ou le méthylmercaptan, dont il renforce l'impact et arrondi le caractère soufré.

L'utilisation des acides 2-oxo-butanoïque, 3-méthyl-2-oxo-butanoïque, 3-méthyl-2-oxo-pentanoïque et 2-oxo-glutarique se révèle aussi particulièrement avantageuse dans la préparation de compositions aromatisantes de type céleri, dont l'arôme devient plus puissant et arrondi par l'addition d'un ou plusieurs de ces acides. Dans ce contexte, on préfère des compositions aromatisantes qui contiennent ces composés en combinaison avec au moins l'un des composés choisis parmi les 2,6-nonadiénol, cis-4-hexénol, hexanal, trans-2-hexénal, 3-propylidènephtalide (3-propylidène-1-benzo[c]furanone), 3-n-butylidènephtalide, ainsi que les huiles essentielles de carotte, céleri, genièvre et livèche.

Par ailleurs, ces mêmes α-céto-acides, ainsi que l'acide 3-mercapto-2-oxo-propanoïque, ont aussi un effet particulièrement enrichissant sur la rondeur et l'impact des arômes de type fromage, notamment lorsque lesdits acides sont utilisés en combinaison avec des composés tels que le méthional, le sulfure de diméthyle, le 3-méthylthiopropionate de méthyle, les 2-heptanone et 2-nonanone, les δ-décalactone et δ-dodécalactone, les acides propionique, butyrique, isobutyrique, pentanoïque, caproïque, caprilique et caprique, et les mélanges de deux ou plusieurs des composés susmentionnés.

Parmi les α-céto-acides de l'invention, l'acide 3-méthyl-2-oxo-butanoïque, ainsi que ses mélanges avec la valine, produisent des effets particulièrement appréciés lorsqu'utilisés dans des compositions aromatisantes de type vanille ou céréales, ou encore chocolat. On a constaté, par exemple, que ces composés rendaient la note aromatique de la vanille plus arrondie et pouvaient également être utilisés avantageusement en combinaison avec des composés choisis parmi l'acétylméthylcarbinol, l'acétylpropionyle, le diacétyle, la 1-phényl-1,2-propanedione, la 5-dodécanolide, la 4-heptanolide, la 4-octanolide, la 3-hydroxy-2-méthyl-4(4H)-pyranone, la 6-méthyl-3,5-heptadien-2-one, le furfural, la 3,4-diméthyl-1,2-cyclopentanedione, l'eugénol, le Baume du Pérou ou encore la vanilline. Plus particulièrement, l'acide 3-méthyl-2-oxo-butanoïque rend les notes beurrées de ce type de compositions encore plus beurrées, crémeuses et vanillées et renforce l'effet crémeux, noix de coco des composés lactoniques, tout en rendant les notes brunes, brulées et vanillées, phénoliques, plus douces et arrondies.

Des exemples présentés plus loin illustrent aussi l'effet enrichissant dans les compositions de type céréale ou chocolat. Par ailleurs, il a été constaté que cet α-céto-acide (ou son sel de sodium), seul ou en mélange avec la valine, a un effet particulièrement utile sur le Furanéol® ou la 2-éthyl-4-hydroxy-3-méthyl-5(2H)-furanone (origine : Firmenich SA, Genève, Suisse). L'addition de l'acide 3-méthyl-2-oxo-butanoïque à ces composés renforce leur effet sucré, caramel et apporte une note fruitée, fraise et légèrement ananas plus marquée à leur goût, tout en agissant aussi sur la rondeur de leur arôme. Cette rondeur se trouve encore renforcée lorsqu'on ajoute l'acide en mélange avec la valine, laquelle confère un caractère encore plus brûlé, plus sucre brun et mélasse, notamment au goût de la furanone citée ci-dessus. Le pouvoir sucrant de ces composés se trouve aussi renforcé. Les compositions aromatisantes constituées par ces ingrédients sont donc particulièrement appréciées.

Dans des applications de type fromage ou produit laitier, on peut encore citer les effets utiles obtenus avec l'acide 3-(4-hydroxyphényl)-2-oxo-propanoïque. Ainsi, nous avons constaté que ce céto-acide renforce les notes grasses et l'impact fruité de composés tels que les acides butyrique, hexanoïque, octanoïque, décanoïque, isobutyrique, isovalérianique, pentanoïque, 3-phénylpropanoïque ou propanoïque, et qu'il peut ainsi être avantageusement utilisé en mélange avec un ou plusieurs de ces composés. Des effets utiles ont ainsi été observés avec des arômes de type lait condensé (par exemple, 504133 TH ; origine : Firmenich SA, Genève, Suisse) ou de type fromage (par exemple, 504 132 TH ; origine : Firmenich SA, Genève, Suisse) dans lesquels le céto-acide susmentionné était présent dans des proportions comprises entre environ 0,5 et 50 ppm en poids, par rapport au poids de l'arôme.

Finalement, de nombreux α-céto-acides parmi ceux cités auparavant se sont révélés utiles pour des applications dans des boissons dites "light", c'est-à-dire, artificiellement édulcorées, et plus particulièrement celles à base de cola. Certains desdits acides ont des effets remarquables sur plusieurs types d'édulcorants artificiels, d'autres ont des effets plus marqués sur l'un ou l'autre de ces édulcorants en particulier. Ainsi, on peut citer parmi les premiers, l'acide 3-méthyl-2-oxo-butanoïque et ses mélanges avec la L-valine, l'acide 3-méthyl-2-oxo-pentanoïque et ses mélanges avec la L-isoleucine et l'acide 2-oxo-glutarique et ses mélanges avec l'acide L-glutamique. Ces composés améliorent d'une façon générale le goût de boissons contenant de l'Aspartame®, du Cyclamate de sodium, de la Sucralose®, l'Acesulfam® K ou leurs mélanges.

Pratiquement tous les céto-acides préférés cités plus haut ont un effet utile sur l'action édulcorante de l'Aspartame® et des exemples présentés plus loin illustrent des cas particulièrement avantageux de leur utilisation.

En plus, des acides tels que les 2-oxo-butanoïque, 4-méthyl-2-oxo-pentanoïque, 3-hydroxy-2-oxo-butanoïque (seul ou en mélange avec la L-serine), 4-(méthylthio)-2-oxo-butanoïque, 2-oxo-1H-imidazole-4-propanoïque et 3-mercapto-2-oxo-propanoïque, sont capables de renforcer et rendre plus naturel le goût de boissons contenant la Sucralose®, alors que ces deux derniers acides et l'acide 2-oxo-1H-indole-3-propanoïque ont un effet utile plus marqué sur le goût sucré imparti par le Cyclamate de sodium.

De nombreux autres exemples de la richesse d'effets organoleptiques qui peuvent être obtenus selon l'invention à l'aide des α-céto-acides et de leurs mélanges pourraient encore être cités, notamment celui des compositions aromatisantes avantageuses qui résultent de l'utilisation, par exemple, des acides 2-oxo-butanoïque, 3-hydroxy-2-oxo-butanoïque, 2-oxo-glutarique et/ou 3-mercapto-2-oxo-propanoïque, en mélange avec le monosodium glutamate, et dont le goût se trouve amélioré par rapport à celui que l'on obtient à l'usage seul de ce dernier.

On notera donc, que la portée de la présente invention est très large, car celle-ci concerne, de façon générale, toute utilisation à titre d'ingrédient aromatisant d'un composé choisi dans le groupe constitué par les α-céto-acides à l'état essentiellement pur, ainsi que leurs dérivés et précurseurs comestibles pouvant se former desdits acides, respectivement libérer lesdits acides, dans le milieu d'utilisation, et est caractérisée en ce qu'on ajoute ledit composé à

une composition aromatisante ou à un produit alimentaire, en quantité suffisante pour modifier le goût et/ou l'arôme de ladite composition ou dudit produit, et plus particulièrement ses attributs de type gras, crémeux et riche, son caractère sucré, ou globalement, son caractère organoleptique général.

Les α-céto-acides utilisés selon l'invention sont, dans bien des cas, disponibles sur le marché. Alternativement, ils peuvent être préparés à partir de produits commerciaux et à l'aide de réactions de type classique. De même, la préparation de leurs sels, notamment de métaux alcalins, et de leurs esters alkyliques, lorsqu'ils ne sont pas d'origine commerciale, fait appel à des réactions bien connues.

Les précurseurs tels que les acides aminés cités plus haut sont également souvent des substances commercialisées.

Par ailleurs, certains ingrédients actifs tels que les mélanges de plusieurs α-céto-acides, éventuellement contenant les acides aminés correspondants, peuvent être obtenus par réactions enzymatiques (oxydations, déaminations ou transaminations) d'hydrolysats de protéines d'origine naturelle. A cet effet on peut utiliser des enzymes capables de convertir partiellement ou complètement, les acides aminés présents. Bien entendu, des mélanges d'α-céto-acides peuvent aussi être obtenus par exemple par l'action combinée d'une oxydase et d'une catalase sur un mélange des acides aminés correspondants. Selon l'activité et la spécificité de l'enzyme, la nature du mélange d'acides aminés de départ, et la durée de la réaction enzymatique, la conversion du mélange de départ pourra être complète, menant à un mélange des α-céto-acides correspondants, ou partielle, fournissant alors un mélange d'acides aminés et α-céto-acides, ceci après la séparation du système enzymatique. Il est clair que, lorsque ce dernier est dénaturé et n'a pas un effet nocif sur les propriétés organoleptiques du mélange, une séparation ne s'avère pas nécessaire et le mélange tel qu'obtenu peut être utilisé en tant que composition aromatisante selon l'invention.

Selon un exemple de préparation enzymatique d'un mélange d'α-céto-acides, on a procédé ainsi : on a mélangé, dans des proportions molaires équivalentes (0,1 mmole de chaque), la L-méthionine, L-phénylalamine, L-leucine, L-tryptophane et L-isoleucine. Ce mélange d'acides aminés d'origine commerciale a ensuite été transformé enzymatiquement en solution aqueuse, dans les conditions de réaction suivantes :

- pH - 7,2 (à l'aide de 6 ml de pyrophosphate de sodium 0,05 M)
- 6 mg de L-amino-acide oxydase (E.C 1.4.3.2, Bothrops Atrox ; origine : Sigma Chemical Co.)
- 0,1-1 mg de catalase de foie de bovin (origine : Fluka 60632)
- léger courant d'air (ou d'oxygène)
- température : 37° C
- temps de réaction : 12 - 48 h

Après 48 h de réaction, une analyse chromatographique en couche mince indiquait une conversion à 100% des acides aminés cités en les α-céto-acides correspondants. On a ensuite pasteurisé le produit de la réaction pour dénaturer les enzymes, centrifugé et concentré pour obtenir un mélange contenant des quantités équivalentes des acides 4-(méthylthio)-2-oxo-butanoïque, 2-oxo-3-phénylpropanoïque, 4-méthyl-2-oxo-pentanoïque, 2-oxo-1H-indole-3-propanoïque et 3-méthyl-2-oxo-pentanoïque.

L'invention sera maintenant décrite plus en détail à l'aide des exemples suivants, dans lesquels les α-céto-acides utilisés selon l'invention sont désignés par les chiffres indiqués dans le tableau ci-après :

TABLEAU

| Composé | Chiffre correspondant |
|---|---|
| Acide glyoxylique | Composé 1 |
| Acide 2-oxo-propanoïque | Composé 2 |
| Acide 2-oxo-butanoïque | Composé 3 |
| Acide 3-méthyl-2-oxo-butanoïque | Composé 4 |
| Acide 3-méthyl-2-oxo-pentanoïque | Composé 5 |
| Acide 4-méthyl-2-oxo-pentanoïque | Composé 6 |
| Acide 3-hydroxy-2-oxo-propanoïque | Composé 7 |
| Acide 3-hydroxy-2-oxo-butanoïque | Composé 8 |
| Acide oxalacétique | Composé 9 |
| Acide 2-oxo-glutarique | Composé 10 |
| Acide 2-oxo-3-phényl-propanoïque | Composé 11 |
| Acide 3-(4-hydroxyphényl)-2-oxo-propanoïque | Composé 12 |
| Acide 2-oxo-1H-indole-3-propanoïque | Composé 13 |

TABLEAU (suite)

| Composé | Chiffre correspondant |
|---|---|
| Acide 4-(méthylthio)-2-oxo-butanoïque | Composé 14 |
| Acide 5-guanidino-2-oxo-pentanoïque | Composé 15 |
| Acide 6-amino-2-oxo-hexanoïque | Composé 16 |
| Acide 2-oxo-1H-imidazole-4-propanoïque | Composé 17 |
| Acide 3-mercapto-2-oxo-propanoïque | Composé 18 |
| Acide 3-méthyl-2-oxo-hexanoïque | Composé 19 |
| Acide 3-méthyl-2-oxo-heptanoïque | Composé 20 |

Les composés 19 et 20, qui ne sont pas disponibles sur le marché, ainsi que leurs esters méthyliques, ont été préparés à l'aide de réactions de type classique, selon le schéma que voici :

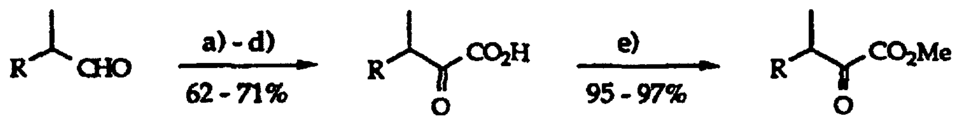


R = n-propyle ou n-butyle; Me-méthyle

a) $Me_3SiCN$, $[ZnI_2]$.
b) 95% aq. $H_2SO_4$, tert-butanol.
c) $CrO_3$, $AcOH-H_2O$.
d) 37% aq. HCl.
e) $CH_2N_2$, $(C_2H_5)_2O$.

Par ailleurs, dans ces exemples, les concentrations des ingrédients indiqués aux tableaux sont toujours citées en parties en poids d'ingrédient, par rapport au poids du produit fini évalué, que ce soit une solution aqueuse saline ou sucrée, ou un produit alimentaire prêt à consommer.

**Manières de réaliser l'invention**

Exemple 1

Compositions aromatisantes de type beurre

On a ajouté à une solution aqueuse saline à 0,5% de NaCl les ingrédients suivants, dans les proportions indiquées, pour préparer des solutions aromatisées contenant les compositions aromatisantes A à J.

TABLEAU

| Ingrédient | Composition aromatisante (ppm) | | | | | | | | | |
|---|---|---|---|---|---|---|---|---|---|---|
| | A | B | C | D | E | P | G | H | I | J |
| Arôme de base* | 1000 | 1000 | 1000 | 1000 | 1000 | 1000 | 1000 | 1000 | 1000 | 1000 |
| Composé 3 | - | 0,3 | - | - | - | - | - | - | - | - |
| Composé 4 | - | - | 0,3 | - | - | - | - | - | - | - |
| Composé 5 | - | - | - | 0,3 | - | - | - | - | - | - |
| Composé 7 | - | - | - | - | 0,3 | - | - | - | - | - |
| Composé 10 | - | - | - | - | - | 0,3 | - | - | - | - |

* type beurre, 504.131 CE ; origine : Firmenich SA, Genève, Suisse

TABLEAU (suite)

| Ingrédient | Composition aromatisante (ppm) | | | | | | | | | |
|---|---|---|---|---|---|---|---|---|---|---|
| | A | B | C | D | E | P | G | H | I | J |
| Composé 11 | - | - | - | - | - | - | 0,3 | - | - | - |
| Composé 12 | - | - | - | - | - | - | - | 0,3 | - | - |
| Composé 14 | - | - | - | - | - | - | - | - | 0,3 | - |
| Composé 18 | - | - | - | - | - | - | - | - | - | 0,3 |

Les solutions salines ainsi obtenues ont été soumises pour évaluation à l'aveugle à un panel d'experts aromaticiens, composé d'au moins dix membres.
Le résultat de cette évaluation a montré que les solutions contenant les compositions B à J étaient préférées par une majorité d'aromaticiens, par rapport à celle de la composition de base A, les solutions contenant les compositions C à D, H et J ayant été particulièrement appréciées. De l'avis des aromaticiens, l'addition des composés mentionnés au tableau à l'arôme de base avait eu pour effet d'augmenter le caractère crémeux de ce dernier et de renforcer sa rondeur, le rendant plus proche du goût naturel de beurre. Cet effet d'amélioration du "mouthfeel" de l'arôme était, par ailleurs, particulièrement marqué avec la composition E.
Ainsi, on a ensuite pris cette composition E et on lui a ajouté de la sérine, à raison de 0,15 ppm, 0,3 ppm et 0,6 ppm en poids, par rapport au poids de la solution saline, pour obtenir trois nouvelles solutions qui ont ensuite été soumises, avec celle de la composition E, pour évaluation à l'aveugle au même panel d'experts aromaticiens. Ces derniers devaient indiquer à nouveau leur préférence concernant les propriétés organoleptiques des quatre solutions. De leur avis unanime, les solutions nouvelles, contenant les compositions modifiées à l'aide de la sérine, avaient un caractère encore plus crémeux que celui de la solution contenant la composition E, et leur note animale était mieux couverte. Leur goût était aussi plus durable dans la bouche.

Exemple 2

Aromatisation de margarines

On a ajouté à une margarine "low fat" du commerce (Sobluma Minical, 40% de matières grasses ; origine : Migros, Suisse) les compositions aromatisantes selon l'invention contenant les ingrédients suivants, dans les proportions indiquées ci-après :

| Ingrédient | Composition (ppm) | | | |
|---|---|---|---|---|
| | A | B | C | D |
| Arôme de type beurre * | 1200 | 1200 | 1200 | 1200 |
| Composé 7 | 0,4 | 0,4 | 0,4 | 0,4 |
| Sérine | - | 0,2 | 0,4 | 0,8 |

* 504.131 CE ; origine : Firmenich SA, Genève, Suisse

On a ainsi obtenu 4 échantillons de margarine aromatisée, lesquels ont ensuite été évalués à l'aveugle par un panel d'experts aromaticiens et comparés à un échantillon de base contenant 1200 ppm en poids de l'arôme de base de type beurre susmentionné, par rapport au poids de margarine.
Les résultats de ces évaluations ont montré que les échantillons aromatisés à l'aide des compositions A à D selon l'invention ont été systématiquement préférés audit échantillon de base, en ce qui concernait leur sensation en bouche. De l'avis des aromaticiens, l'échantillon contenant la composition A avait un goût plus beurre frais, plus gras et plus riche que celui de l'échantillon de base, alors que le caractère crémeux de la margarine contenant la composition B était encore accentué par rapport à l'échantillon aromatisé à l'aide de la composition A. D'autre part, on remarquait l'apparition de notes encore plus crémeuses et grasses, rappelant le beurre fondu, dans les échantillons de margarine aromatisés avec la composition C et ceux qui contenaient la composition D étaient presque trop crémeux, très volumineux et leur "mouthfeel" était accru.
Des essais similaires ont été effectués avec une margarine du commerce beaucoup plus riche en matières grasses (Mibona Classic, 83% de matières grasses ; origine : Migros, Suisse), à laquelle on a ajouté les compositions citées ci-après :

| Ingrédient | Composition (ppm) | | | |
|---|---|---|---|---|
| | E | F | G | H |
| Arôme de type beurre * | 1000 | 1000 | 1000 | 1000 |
| Composé 7 | 0,4 | 0,4 | 0,4 | 0,4 |
| Sérine | - | 0,2 | 0,4 | 0,8 |

* 504.131 CE ; origine : Firmenich SA, Genève, Suisse

Lorsque les quatre échantillons de margarine aromatisée ont été évalués dans les conditions susmentionnées et comparés à une margarine de base aromatisée uniquement à l'aide de l'arôme de type beurre cité (1000 ppm), on a constaté des effets organoleptiques similaires à ceux mentionnés ci-dessus. Par ailleurs, les aromaticiens ont indiqué que l'addition de la sérine, en plus de l'acide 3-hydroxy-2-oxo-propanoïque, non seulement renforçait le caractère crémeux de la margarine et prolongeait son impact dans la bouche, mais permettait également de mieux couvrir la note animale de l'arôme, de façon à rendre le goût plus équilibré et plus beurre frais.

Exemple 3

Compositions aromatisantes de type fromage

On a ajouté à une solution aqueuse saline à 0,5% de NaCl les ingrédients suivants, dans les proportions indiquées, pour préparer des solutions aromatisée contenant les compositions aromatisantes A à K.

TABLEAU

| Ingrédient | Composition aromatisante (ppm) | | | | | | | | | | |
|---|---|---|---|---|---|---|---|---|---|---|---|
| | A | B | C | D | E | F | G | H | I | J | K |
| Arôme de base* | 1000 | 1000 | 1000 | 1000 | 1000 | 1000 | 1000 | 1000 | 1000 | 1000 | 1000 |
| Composé 3 | - | 0,5 | - | - | - | - | - | - | - | - | - |
| Composé 4 | - | - | 0,5 | - | - | - | - | - | - | - | - |
| Composé 5 | - | - | - | 0,5 | - | - | - | - | - | - | - |
| Composé 6 | - | - | - | - | 0,5 | - | - | - | - | - | - |
| Composé 7 | - | - | - | - | - | 0,5 | - | - | - | - | - |
| Composé 10 | - | - | - | - | - | - | 0,5 | - | - | - | - |
| Composé 12 | - | - | - | - | - | - | - | 0,5 | - | - | - |
| Composé 13 | - | - | - | - | - | - | - | - | 0,5 | - | - |
| Composé 14 | - | - | - | - | - | - | - | - | - | 0,5 | - |
| Composé 18 | - | - | - | - | - | - | - | - | - | - | 0,5 |

* type fromage, 504.132 CE ; origine : Firmenich SA, Genève, Suisse

Les solutions salines ainsi obtenues ont été soumises pour évaluation à l'aveugle à un panel d'experts aromaticiens, composé d'au moins dix membres.
Le résultat de cette évaluation a montré que les solutions contenant les compositions B à K étaient préférées par une majorité d'aromaticiens, par rapport à celle de la composition de base A. A leur avis, elles présentaient toutes un caractère crémeux accru et avaient un meilleur impact dans la bouche que la solution de base. Cet effet d'amélioration du "mouthfeel" de l'arôme était, par ailleurs, particulièrement marqué avec les compositions C, D, G, H et K.

Exemple 4

Compositions aromatisantes de type lait condensé

On a préparé des solutions dans l'eau de source des ingrédients suivants, ajoutés à l'eau dans les proportions

indiquées.

TABLEAU

| Ingrédient | Composition aromatisante (ppm) | | | | | | | | | |
|---|---|---|---|---|---|---|---|---|---|---|
| | A | B | C | D | E | P | G | H | I | J |
| Arôme de bise* | 1000 | 1000 | 1000 | 1000 | 1000 | 1000 | 1000 | 1000 | 1000 | 1000 |
| Composé 3 | - | 0,5 | - | - | - | - | - | - | - | - |
| Composé 4 | - | - | 0,5 | - | - | - | - | - | - | - |
| Composé 5 | - | - | - | 0,5 | - | - | - | - | - | - |
| Composé 7 | - | - | - | - | 0,5 | - | - | - | - | - |
| Composé 9 | - | - | - | - | - | 0,5 | - | - | - | - |
| Composé 11 | - | - | - | - | - | - | 0,5 | - | - | - |
| Composé 12 | - | - | - | - | - | - | - | 0,5 | - | - |
| Composé 14 | - | - | - | - | - | - | - | - | 0,5 | - |
| Composé 18 | - | - | - | - | - | - | - | - | - | 0,5 |

* type lait condensé, 504.133 CE ; origine : Firmenich SA, Genève, Suisse

Lorsque les solutions ainsi obtenues ont été soumises pour évaluation à l'aveugle à un panel d'experts aromaticiens, lesquels devaient se prononcer sur leur préférence eu égard leurs qualités organoleptiques, une nette préférence est apparue pour celles qui contenaient les compositions B, C, E, G et J. Le goût de ces solutions était jugé nettement meilleur que celui de la solution contenant l'arôme de base, plus arrondi et ayant plus d'impact dans la bouche. Par ailleurs, de l'opinion des aromaticiens, toutes les solutions B à J étaient préférées à la solution de base pour leur caractère plus rond et volumineux, mais les cinq citées plus haut présentaient le meilleur "mouthfeel" et un caractère plus naturel.

Exemple 5

Aromatisation d'une boisson à base de cola

On a préparé des échantillons d'une boisson à base de cola aromatisés, en ajoutant à un cola commercial "light" les ingrédients suivants, dans les proportions indiquées :

TABLEAU

| Ingrédient | Echantillon aromatisé (ppm) | | | | | | | | | | |
|---|---|---|---|---|---|---|---|---|---|---|---|
| | A | B | C | D | E | F | G | H | I | J | K |
| Composé 3 | 0,03 | - | - | - | - | - | - | - | - | - | - |
| Composé 4 | - | 0,03 | - | - | - | - | - | - | - | - | - |
| Composé 5 | - | - | 0,03 | - | - | - | - | - | - | - | - |
| Composé 6 | - | - | - | 0,03 | - | - | - | - | - | - | - |
| Composé 7 | - | - | - | - | 0,03 | - | - | - | - | - | - |
| Composé 9 | - | - | - | - | - | 0,03 | - | - | - | - | - |
| Composé 10 | - | - | - | - | - | - | 0,03 | - | - | - | - |
| Composé 11 | - | - | - | - | - | - | - | 0,03 | - | - | - |
| Composé 12 | - | - | - | - | - | - | - | - | 0,03 | - | - |
| Composé 14 | - | - | - | - | - | - | - | - | - | 0,03 | - |
| Composé 18 | - | - | - | - | - | - | - | - | - | - | 0,03 |

Les échantillons ainsi obtenus ont été évalués à l'aveugle par un panel d'experts aromaticiens, par rapport au produit commercial.
Le panel a trouvé que tous les échantillons A à K avaient un impact gustatif nettement accru par rapport au produit commercial, donnant une sensation plus ronde et remplie, plus naturelle et plus proche du goût d'un Coca Cola non allégé. Ces effets étaient particulièrement remarquables avec les échantillons A, C, D et F à I, qui ont été préférés.
Des tests similaires ont été effectués avec un Coca Cola commercial non allégé en sucre auquel on a ajouté, à raison de 0,04 ppm, les composés 3, 5, 6, 9, 10, 11 et 12. On a alors constaté que l'addition de ces derniers améliorait également le goût de ce produit, qui provoquait une sensation plus remplie dans la bouche et devenait plus ample, plus rond. Cette amélioration du "mouthfeel" était plus marquée dans ce cas avec les composés 3, 6, 9, 10 et 12.

Exemple 6

Aromatisation d'une boisson à l'orange

On a préparé des échantillons aromatisés d'une boisson au goût d'orange, en ajoutant à un produit commercial (Fanta® Orange) les ingrédients suivants, dans les proportions indiquées :

TABLEAU

| Ingrédient | Echantillon aromatisé (ppm) | | | |
|---|---|---|---|---|
| | A | B | C | D |
| Composé 5 | 0,06 | - | - | - |
| Composé 6 | - | 0,06 | - | - |
| Composé 9 | - | - | 0,06 | - |
| Composé 10 | - | - | - | 0,06 |

Les échantillons ainsi obtenus ont été évalués à l'aveugle par un panel d'experts aromaticiens, par rapport au produit commercial.
Le résultat de cette évalution a montré que tous les échantillons aromatisés étaient préférés au produit commercial par un majorité d'aromaticiens. Par ailleurs, l'échantillon B a été unanimement choisi comme étant le meilleur du point de vue de la sensation en bouche et de son goût plus naturel, plus sucré.

Exemple 7

Aromatisation d'une limonade

On a aromatisé une limonade d'origine commerciale (Henniez® Fruitastic Citronette) en lui ajoutant les ingrédients suivants, dans les proportions indiquées :

TABLEAU

| Ingrédient | Echantillon aromatisé (ppm) | | | | |
|---|---|---|---|---|---|
| | A | B | C | D | E |
| Composé 3 | 0,06 | - | - | - | - |
| Composé 6 | - | 0,06 | - | - | - |
| Composé 9 | - | - | 0,06 | - | - |
| Composé 10 | - | - | - | 0,06 | - |
| Composé 12 | - | - | - | - | 0,06 |

Les échantillons ainsi obtenus ont été évalués à l'aveugle par un panel d'experts aromaticiens, par rapport au produit commercial.
Le résultat de cette évaluation a montré que tous les échantillons aromatisés étaient préférés au produit commercial par une majorité d'aromaticiens. En plus, les échantillons B et C ont été particulièrement préférés pour leur goût plus naturel et leur meilleur impact dans la bouche.

Exemple 8

Aromatisation d'une bière

On a ajouté à une bière sans alcool du commerce (Moussy ® Suisse) les ingrédients suivants, dans les proportions indiquées, pour préparer des bières aromatisées.

TABLEAU

| Ingrédient | Echantillon aromatisé (ppm) | | | | | |
|---|---|---|---|---|---|---|
| | A | B | C | D | E | F |
| Composé 3 | 0,06 | - | - | - | - | - |
| Composé 5 | - | 0,06 | - | - | - | - |
| Composé 6 | - | - | 0,06 | - | - | - |
| Composé 9 | - | - | - | 0,06 | - | - |
| Composé 10 | - | - | - | - | 0,06 | - |
| Composé 11 | - | - | - | - | - | 0,06 |

Lorsque les échantillons aromatisés ainsi obtenus ont été comparés à l'aveugle par un panel d'experts aromaticiens avec la bière sans alcool du commerce, une préférence claire pour les bières aromatisées s'est révélée, celles-ci ayant été jugées d'un goût plus volumineux et plus arrondi que celui de la bière de base, de sorte que l'impact dans la bouche des bières aromatisées était jugé beaucoup plus proche de celui d'une bière normalement alcoolisée. Ces effets étaient par ailleurs représentés au mieux dans les échantillons C et E.

Exemple 9

Compositions aromatisantes de type vanille

On a ajouté à une solution aqueuse sucrée à 10% les ingrédients suivants, dans les proportions indiquées, pour préparer des solutions aromatisées contenant les compositions aromatisantes A à G.

TABLEAU

| Ingrédient | Composition aromatisante (ppm) | | | | | | |
|---|---|---|---|---|---|---|---|
| | A | B | C | D | E | F | G |
| Arôme de base* | 100 | 100 | 100 | 100 | 100 | 100 | 100 |
| Composé 4 | - | 1,0 | - | - | - | - | - |
| Composé 5 | - | - | 1,0 | - | - | - | - |
| Composé 7 | - | - | - | 1,0 | - | - | - |
| Composé 11 | - | - | - | - | 1,0 | - | - |
| Composé 13 | - | - | - | - | - | 1,0 | - |
| Composé 14 | - | - | - | - | - | - | 1,0 |

* type vanille, 502.807 A ; origine : Firmenich SA, Genève, Suisse

Les solutions ainsi obtenues ont été soumises pour évaluation à l'aveugle à un panel d'experts aromaticiens, composé d'au moins dix membres.

De l'avis des aromaticiens, les solutions contenant les compositions B à G possédaient toutes un caractère plus crémeux et produisaient un effet gustatif plus durable que celle de la composition de base A. Cette amélioration de la sensation en bouche de l'arôme de base était particulièrement prononcée pour les solutions qui contenaient les compositions B, D et G, alors que la note de type gousse de vanille des compositions C et E apparaissait renforcée par rapport à celle de la composition A.

Il a également été constaté que l'addition, à l'arôme de base, des composés 19 ou 20, ou de leurs esters méthyliques,

dans des concentrations de l'ordre de 0,5 à 5 ppm en poids, améliorait aussi le goût de l'arôme de base, le rendant plus doux, vanillé et laiteux.

Exemple 10

Compositions aromatisantes de type chocolat

On a ajouté à une solution aqueuse sucrée à 10% les ingrédients suivants, dans les proportions indiquées, pour préparer des solutions aromatisées contenant les compositions aromatisantes A à H.

TABLEAU

| Ingrédient | Composition aromatisante (ppm) | | | | | | | |
|---|---|---|---|---|---|---|---|---|
| | A | B | C | D | E | F | G | H |
| Arôme de base* | 100 | 100 | 100 | 100 | 100 | 100 | 100 | 100 |
| Composé 2 | - | 1,0 | - | - | - | - | - | - |
| Composé 3 | - | - | 1,0 | - | - | - | - | - |
| Composé 4 | - | - | - | 1,0 | - | - | - | - |
| Composé 6 | - | - | - | - | 1,0 | - | - | - |
| Composé 11 | - | - | - | - | - | 1,0 | - | - |
| Composé 13 | - | - | - | - | - | - | 1,0 | - |
| Composé 14 | - | - | - | - | - | - | - | 1,0 |

* type chocolat, 503.313 A ; origine : Firmenich SA, Genève, Suisse

Les solutions ainsi obtenues ont été soumises pour évaluation à l'aveugle à un panel d'experts aromaticiens, qui devaient indiquer leurs préférences du point de vue des qualités organoleptiques des solutions.
Les résultats de cette évaluation ont mis en évidence des modifications remarquables dans le profil organoleptique de l'arôme de base, en particulier dans le cas des compositions C, D, E, F, G et H, dont les solutions avaient un goût beaucoup plus intense, plus réminiscent du goût de chocolat noir, plus poudreux et arrondi, et même plus alcoolisé que la solution de la composition A. Elles avaient en plus un impact beaucoup plus crémeux et riche dans la bouche.

Exemple 11

Compositions aromatisantes de type café

On a ajouté à une solution aqueuse sucrée à 10% les ingrédients suivants, dans les proportions indiquées, pour préparer des solutions aromatisées contenant les compositions aromatisantes A à F.

TABLEAU

| Ingrédient | Composition aromatisante (ppm) | | | | | |
|---|---|---|---|---|---|---|
| | A | B | C | D | E | F |
| Arôme de base* | 100 | 100 | 100 | 100 | 100 | 100 |
| Composé 2 | - | 1,0 | - | - | - | - |
| Composé 3 | - | - | 1,0 | - | - | - |
| Composé 4 | - | - | - | 1,0 | - | - |
| Composé 7 | - | - | - | - | 1,0 | - |
| Composé 13 | - | - | - | - | - | 1,0 |

* type café, 502.334 A ; origine : Firmenich SA, Genève, Suisse

Ces solutions ont été évaluées à l'aveugle par un panel d'experts aromaticiens, lesquels ont indiqué une

préférence majoritaire pour les solutions contenant les compositions B à F. Plus particulièrement, il a été trouvé que les solutions des compositions B, D et E avaient un caractère crémeux, beurre accru par rapport à celui de la solution de base, avec une note de café fraîchement moulu et un effet "mouthfeel" de longue durée. D'autre part, la modification notoire en plus dans les solutions des compositions C et F, par rapport à celle de la composition de base A, était le renforcement de la note rôtie, brûlée, genre café noir, avec une plus grande intensité du caractère de type "expresso".

Exemple 12

Aromatisation d'une boisson au thé

On a ajouté à une boisson au thé du commerce (Lipton® Light, édulcorée à l'Aspartame ®) les ingrédients suivants, dans les proportions indiquées, pour préparer des boissons aromatisées.

TABLEAU

| Ingrédient | Echantillon aromatisé (ppm) | | | | | | |
|---|---|---|---|---|---|---|---|
| | A | B | C | D | E | F | G |
| Composé 5 | 1,2 | - | - | - | - | - | - |
| Composé 6 | - | 1,2 | - | - | - | - | - |
| Composé 7 | - | - | 1,2 | - | - | - | - |
| Composé 11 | - | - | - | 1,2 | - | - | - |
| Composé 12 | - | - | - | - | 1,2 | - | - |
| Composé 13 | - | - | - | - | - | 1,2 | - |
| Composé 18 | - | - | - | - | - | - | 1,2 |

Lorsque les échantillons aromatisés ainsi obtenus ont été comparés à l'aveugle par un panel d'experts aromaticiens avec le thé du commerce, une préférence claire pour les boissons aromatisées s'est révélée, celles-ci ayant été jugées d'un goût moins amère et plus arrondi, la note poudreuse de l'Aspartame ® ayant aussi été réduite par rapport à celle du thé commercial, avec le résultat que la douceur de celui-ci se trouvait augmentée. Ces effets étaient particulièrement marqués dans les échantillons A à C et D, dont le goût était plus proche de celui d'une boisson naturellement sucrée que celui du thé commercial. Par ailleurs, la boisson A avait acquis une note fruitée, de type mûre, alors que l'échantillon F possédait un intéressant caractère fermenté et feuille sèche.

Exemple 13

Compositions aromatisantes de type viande

On a ajouté à une solution aqueuse saline à 0,5% de NaCl les ingrédients suivants, dans les proportions indiquées, pour préparer des solutions aromatisées contenant les compositions aromatisantes A à K.

TABLEAU

| Ingrédient | Composition aromatisante (ppm) | | | | | | | | | | |
|---|---|---|---|---|---|---|---|---|---|---|---|
| | A | B | C | D | E | F | G | H | I | J | K |
| Arôme de base* | 20 | 20 | 20 | 20 | 20 | 20 | 20 | 20 | 20 | 20 | 20 |
| Composé 2 | - | 0,5 | - | - | - | - | - | - | - | - | - |
| Composé 3 | - | - | 0,5 | - | - | - | - | - | - | - | - |
| Composé 6 | - | - | - | 0,5 | - | - | - | - | - | - | - |
| Composé 7 | - | - | - | - | 0,5 | - | - | - | - | - | - |
| Composé 9 | - | - | - | - | - | 0,5 | - | - | - | - | - |

* type boeuf rôti, 504.079 TH ; origine : Firmenich SA, Genève, Suisse

TABLEAU (suite)

| Ingrédient | Composition aromatisante (ppm) | | | | | | | | | | |
|---|---|---|---|---|---|---|---|---|---|---|---|
| | A | B | C | D | E | F | G | H | I | J | K |
| Composé 11 | - | - | - | - | - | - | 0,5 | - | - | - | - |
| Composé 12 | - | - | - | - | - | - | - | 0,5 | - | - | - |
| Composé 13 | - | - | - | - | - | - | - | - | 0,5 | - | - |
| Composé 14 | - | - | - | - | - | - | - | - | - | 0,5 | - |
| Composé 18 | - | - | - | - | - | - | - | - | - | - | 0,5 |

Les solutions salines ainsi obtenues ont été soumises pour évaluation à l'aveugle à un panel d'experts aromaticiens, composé d'au moins dix membres.
Le résultat de cette évaluation a montré que les solutions contenant les compositions B à K ont été systématiquement préférées par une majorité d'aromaticiens, par rapport à celle de la composition de base A. A leur avis, elles présentaient toutes un caractère viandeux accru, un goût plus riche et un meilleur impact que la solution de base, comme il ressort du tableau ci-après résumant les évaluations en termes descripteurs organoleptiques, par rapport à la solution de base.

TABLEAU

| Composition | Goût |
|---|---|
| B | plus viandeux et plein, plus rôti |
| C | plus gras, plus de corps, plus équilibré |
| D | plus grillé, viandeux et arrondi |
| E | plus gras et grillé, plus croustillant |
| F | plus gras et juteux, saignant |
| G | plus rôti, arrondi et suif |
| H | plus de corps, plus gras et viandeux |
| I | plus rôti, riche et huileux |
| J | plus gras, riche croustillant et arrondi, plus de corps |
| K | plus grillé, suif |

Les compositions B, D à F et J ont été particulièrement appréciées.

Exemple 14

Compositions aromatisantes de type viande

On a ajouté à une solution aqueuse saline à 0,5% de NaCl les ingrédients suivants, dans les proportions indiquées, pour préparer des solutions aromatisées contenant les compositions aromatisantes A à H.

TABLEAU

| Ingrédient | Composition aromatisante (ppm) | | | | | | | |
|---|---|---|---|---|---|---|---|---|
| | A | B | C | D | E | F | G | H |
| Arôme de base* | 50 | 50 | 50 | 50 | 50 | 50 | 50 | 50 |
| Composé 1 | - | 0,5 | - | - | - | - | - | - |
| Composé 6 | - | - | 0,5 | - | - | - | - | - |
| Composé 7 | - | - | - | 0,5 | - | - | - | - |
| Composé 11 | - | - | - | - | 0,5 | - | - | - |
| Composé 13 | - | - | - | - | - | 0,5 | - | - |

* type bouillon de boeuf, 504.080 TH ; origine : Firmenich SA, Suisse

TABLEAU (suite)

| Ingrédient | Composition aromatisante (ppm) | | | | | | | |
|---|---|---|---|---|---|---|---|---|
| | A | B | C | D | E | F | G | H |
| Composé 14 | - | - | - | - | - | - | 0,5 | - |
| Composé 18 | - | - | - | - | - | - | - | 0,5 |

Les solutions salines ainsi obtenues ont été soumises pour évaluation à l'aveugle à un panel d'experts aromaticiens, composé d'au moins dix membres.
Le résultat de cette évaluation a montré que les solutions contenant les compositions B à H ont été systématiquement préférées par une majorité d'aromaticiens, par rapport à celle de la composition de base A. A leur avis, elles présentaient toutes un caractère plus arrondi et volumineux, un goût plus riche et un meilleur impact que la solution de base, comme il ressort du tableau ci-après résumant les évaluations en termes descripteurs organoleptiques, par rapport à la solution de base.

TABLEAU

| Composition | Goût |
|---|---|
| B | plus gras, huileux et arrondi |
| C | plus animal, renforcé dans les notes viande, direction porc |
| D | animal, suif, viandeux, plus d'impact |
| E | plus gras et rôti, plus viande, plus copieux |
| F | plus doux et huileux, viandeux, copieux et arrondi |
| G | plus rôti, arrondi et moins suif |
| H | plus viande, bouillon, rôti et arrondi |

Les aromaticiens ont manisfesté un intérêt particulier pour les compositions C, F et plus spécialement H.

Exemple 15

Compositions aromatisantes de type viande

On a ajouté à une solution aqueuse saline à 0,5% de NaCl les ingrédients suivants, dans les proportions indiquées, pour préparer des solutions aromatisées contenant les compositions aromatisantes A à G.

TABLEAU

| Ingrédient | Composition aromatisante (ppm) | | | | | | |
|---|---|---|---|---|---|---|---|
| | A | B | C | D | E | F | G |
| Arôme de base* | 100 | 100 | 100 | 100 | 100 | 100 | 100 |
| Composé 2 | - | 0,5 | - | - | - | - | - |
| Composé 4 | - | - | 0,5 | - | - | - | - |
| Composé 6 | - | - | - | 0,5 | - | - | - |
| Composé 12 | - | - | - | - | 0,5 | - | - |
| Composé 13 | - | - | - | - | - | 0,5 | - |
| Composé 18 | - | - | - | - | - | - | 0,5 |

* type boeuf salé ("savoury beef"), 504.081 TH ; origine : Firmenich SA, Genève, Suisse

Les solutions salines ainsi obtenues ont été soumises pour évaluation à l'aveugle à un panel d'experts aromaticiens, composé d'au moins dix membres.
Le résultat de cette évaluation a montré que les solutions contenant les compositions B à G ont été systématiquement préférées par une majorité d'aromaticiens, par rapport à celle de la composition de base A. A leur avis, elles présentaient toutes un caractère viandeux accru, un goût plus riche, gras et un meilleur impact que la solution de base, comme il

ressort du tableau ci-après résumant les évaluations en termes descripteurs organoleptiques, par rapport à la solution de base.

TABLEAU

| Composition | Goût |
|---|---|
| B | plus viandeux et bouillon, légèrement plus gras, plus d'impact |
| C | plus riche, moins soufré, plus gras et arrondi, plus d'impact et plus équilibré |
| D | plus juteux, potage, arrondi et rôti, plus d'impact |
| E | plus viandeux, rôti, arrondi, notes soufrées applaties |
| F | plus bouillon, viandeux, riche et arrondi, saignant |
| G | plus viandeux, arrondi, jus, soufré |

Les compositions C et E ont été particulièrement appréciées.

Exemple 16

Aromatisation d'un dessert instantané

On a préparé un dessert instantané allégé à l'aide des ingrédients suivants :

| Ingrédients | Parties en poids |
|---|---|
| Sucre | 69,13 |
| Dariloid® QH 1) | 3,00 |
| Pyrophosphate de sodium en poudre | 1,30 |
| Sulfate de calcium dihydraté | 0,70 |
| Sel | 0,40 |
| Colorant alimentaire | 0,47 |
| Total | 75,00 |

1) alginate ; origine : Kelco International GmbH, Allemagne

Dans un récipient adéquat on a incorporé les ingrédients susmentionnés dans 480 ml de lait froid. Le mélange a été brassé dans un mélangeur électrique pendant 3 minutes et ensuite versé sur des coupes à dessert. Ces dernières ont été mises au réfrigérateur pendant 15 minutes.
Parallèlement on a préparé des desserts aromatisés selon l'invention, en ajoutant au dessert de base susmentionné, avant sa mise au réfrigérateur, les ingrédients suivants, dans les proportions indiquées.

| Ingrédient | Dessert aromatisé (ppm) | | | |
|---|---|---|---|---|
| | A | B | C | D |
| Arôme* | 1300 | 1300 | 1300 | 1300 |
| Composé 4 | 0,70 | 0,70 | 0,70 | 0,40 |
| Valine | - | 0,35 | 0,70 | 0,80 |

* type lait condensé, 504.133 CE; origine: Firmenich SA, Genève, Suisse

Ces quatre desserts ont ensuite été comparés à l'aveugle par un panel d'experts aromaticiens avec le dessert de base aromatisé à l'aide de 1300 ppm de l'arôme de lait condensé susmentionné. Les aromaticiens ont manifesté une préférence unanime pour les desserts aromatisés A à D, dont le goût a été jugé plus beurré et arrondi, comme il ressort du tableau ci-après résumant les évaluations en termes descripteurs organoleptiques, par rapport au dessert de base contenant uniquement l'arôme.

TABLEAU

| Dessert | Goût |
|---|---|
| A | moins brûlé, plus crémeux, fermenté, rhum et vanille, note volatile plus arrondie, moins caramel et plus beurre |
| B | plus vanilline, caramel et beurré |
| C | plus doux et arrondi, plus crémeux et beurré, vanille |
| D | plus sucré et beurré, beurre fondu, légèrement noisette |

Exemple 17

Compositions aromatisantes de type légumes

On a ajouté à une solution aqueuse saline à 0,5% de NaCl les ingrédients suivants, dans les proportions indiquées, pour préparer des solutions aromatisées contenant les compositions aromatisantes A à E.

TABLEAU

| Ingrédient | Composition aromatisante (ppm) | | | | |
|---|---|---|---|---|---|
| | A | B | C | D | E |
| Arôme de base* | 200 | 200 | 200 | 200 | 200 |
| Composé 6 | - | 0,6 | - | - | - |
| Composé 7 | - | - | 0,6 | - | - |
| Composé 13 | - | - | - | 0,6 | - |
| Composé 14 | - | - | - | - | 0,6 |

* type asperges, 503.484 T ; origine : Firmenich SA, Genève, Suisse

Les solutions ainsi obtenues ont été soumises pour évaluation à l'aveugle à un panel d'experts aromaticiens, composé d'au moins dix membres.
De l'avis des aromaticiens, les solutions contenant les compositions B à D possédaient toutes un caractère plus légumineux et typique de l'asperge que celui de la solution contenant la composition A, et la solution de la composition E en particulier avait beaucoup plus d'impact et un "mouthfeel" amélioré.
Des essais similaires ont été exécutés avec des compositions de type céleri, préparées avec les ingrédients suivants :

TABLEAU

| Ingrédient | Composition aromatisante (ppm) | | | | | | | | | |
|---|---|---|---|---|---|---|---|---|---|---|
| | A | B | C | D | E | F | G | H | I | J |
| Arôme de base* | 200 | 200 | 200 | 200 | 200 | 200 | 200 | 200 | 200 | 200 |
| Composé 2 | - | 0,6 | - | - | - | - | - | | | - |
| Composé 3 | - | - | 0,6 | - | - | - | - | | | - |
| Composé 6 | - | - | - | 0,6 | - | - | - | | | - |
| Composé 7 | - | - | - | - | 0,6 | - | - | | | - |
| Composé 9 | - | - | - | - | - | 0,6 | - | | | - |
| Composé 11 | - | - | - | - | - | - | 0,6 | | | - |
| Composé 12 | - | - | - | - | - | - | - | 0,6 | | - |
| Composé 13 | - | - | - | - | - | - | - | - | 0,6 | - |
| Composé 14 | - | - | - | - | - | - | - | - | - | 0,6 |

* type céleri, 503.071 T ; origine : Firmenich SA, Genève, Suisse

Une fois encore, les aromaticiens ont montré une préférence pour les compositions B à J par rapport à la composition A, avec une préférence particulière pour la composition C dont le goût était devenu plus fort, plus viandeux, terpénique et boisé.

Exemple 18

Aromatisation de jus d'orange et de compositions aromatisantes de type orange

On a ajouté à un jus d'orange de base, obtenu par simple dilution d'un concentré d'origine commerciale, les ingrédients suivants, dans les proportions indiquées, pour préparer des échantillons aromatisés.

TABLEAU

| Ingrédient | Echantillon aromatisé (ppm) | |
|---|---|---|
| | A | B |
| Composé 5 | 1,0 | - |
| Composé 11 | - | 0,5 |

Les jus d'orange ainsi obtenus ont été soumis pour évaluation à l'aveugle à un panel d'experts aromaticiens, avec le jus de base.
De l'avis des aromaticiens, les échantillons A et B possédaient un goût plus doux et arrondi, moins métallique que celui des jus de base, l'échantillon A en particulier ayant aussi plus de corps. Ces effets ont été observés sur toute la gamme de concentrations testée.
D'autre part, l'addition de 1 ppm de composé 11 à un arôme fini de type orange (705 169.01 A; origine : Firmenich SA, Genève, Suisse) a eu pour effet d'améliorer le caractère juteux, la note fruitée, douce de l'arôme et de renforcer son volume et son impact dans la bouche. De l'avis des aromaticiens, le composé de l'invention avait un effet particulièrement marqué sur les notes aldéhydées de l'arôme, en les adoucissant, et renforçait de façon très appréciée les caractères fruités, citronelle conférés par des composés tels que le citral et le citronellal.

Exemple 19

Aromatisation de bouillons

On a préparé un bouillon de viande de base à l'aide d'un cube de type Star Sapore Lieve (origine : Star SpA, Brianza, Italie). A ce bouillon de base on a ajouté, d'une part, 0,5 ppm d'acide 3-méthyl-2-oxo-pentanoïque (composé 5) pour préparer un nouveau bouillon A et, d'autre part, la même quantité de ce composé et 1,5 ppm d'isoleucine pour préparer un nouveau bouillon B.
Les trois bouillons ont ensuite été évalués à l'aveugle par un panel d'experts aromaticiens, lesquels devaient indiquer leur préférence du point de vue des propriétés organoleptiques des produits évalués.
Une majorité d'aromaticiens a préféré les bouillons A et B au bouillon de base, le goût du bouillon A ayant été jugé plus viandeux, arrondi et umami, et celui du bouillon B ayant un caractère viande plus marqué, avec des notes grasses plus équilibrées.
Des essais similaires ont été exécutés avec un bouillon de base de type légumes, préparé à l'aide d'un cube Knorr® Gusto Vegetale (origine : CPC Italia SpA, Milan, Italie). A ce bouillon de base on a ajouté 1 ppm d'acide 3-mercapto-2-oxo-propanoïque (composé 18) pour préparer un nouveau bouillon C. Parallèlement, un nouveau bouillon D a été préparé en ajoutant au bouillon de base la même quantité de ce composé et 2 ppm de cystéine (sous forme de sel avec HCl).
Lors de l'évaluation à l'aveugle des bouillons C et D et du bouillon de base, une nette préférence pour les deux premiers a été constatée, le bouillon D ayant été le plus apprécié.

Exemple 20

Aromatisation de fromages de type "Cantadou"

On a préparé des fromages aromatisés selon l'invention, en ajoutant à un fromage de base de type "Cantadou-ail, fines herbes" (origine : Migros, Suisse), les ingrédients suivants, dans les proportions indiquées.

| Ingrédient | Fromage aromatisé (ppm) | | | |
|---|---|---|---|---|
| | A | B | C | D |
| Composé 18 | 0,80 | 0,80 | 0,80 | 0,80 |
| Cystéine | - | 0,40 | 0,80 | 1,60 |

Ces quatre fromages ont ensuite été comparés à l'aveugle par un panel d'experts aromaticiens avec le fromage de base. L'effet de l'addition des ingrédients susmentionnés ressort clairement du tableau ci-après qui résume les évaluations en termes descripteurs organoleptiques, par rapport au fromage de base.

TABLEAU

| Fromage | Goût |
|---|---|
| A | plus acide, plus gras, note ail un peu couverte |
| B | plus gras, doux, crémeux, durée en bouche prolongée |
| C | presque mayonnaise, crémeux, plus salé, glutamate |
| D | mayonnaise, presque cuit-viandeux, lourd, herbal |

Cet effet d'augmentation de la crémosité du fromage, jusqu'à devenir presque huileux, a également été observé avec deux autres types de "Cantadou" sur lesquels des essais similaires ont été effectués, dont les résultats sont résumés ci-après.
Ainsi, à un "Cantadou-curry" (origine : Migros) on a ajouté les ingrédients suivants:

| Ingrédient | Fromage aromatisé (ppm) | | | |
|---|---|---|---|---|
| | E | F | G | H |
| Composé 18 | 0,80 | 0,80 | 0,80 | 0,80 |
| Cystéine | - | 0,40 | 0,80 | 1,60 |

Lors de l'évaluation des quatre fromages nouveaux, par rapport au fromage de base, les commentaires suivants ont été formulés :

TABLEAU

| Fromage | Goût |
|---|---|
| E | moins craie, plus acide, plus de "mouthfeel", plus curry et légèrement moins fénugrec |
| F | moins acide, plus crémeux, plus de "mouthfeel" |
| G | plus salé, plus gras-crémeux, note caramel et cumin accrue, plus de "mouthfeel" |
| H | pâteux, très lourd et beurré, note curry un peu étouffée |

Finalement, à un "Cantadou-raifort" (origine: Migros) on a ajouté les ingrédients suivants :

| Ingrédient | Fromage aromatisé (ppm) | | | |
|---|---|---|---|---|
| | I | J | K | L |
| Composé 18 | 0,80 | 0,80 | 0,80 | 0,80 |
| Cystéine | - | 0,40 | 0,80 | 1,60 |

Lors de l'évaluation des quatre fromages nouveaux, par rapport au fromage de base, les commentaires suivants ont été formulés :

TABLEAU

| Fromage | Goût |
|---|---|
| I | plus fort, plus piquant, plus acide |
| J | encore plus relevé que I, plus crémeux, un peu fromage fondu |
| K | côté piquant encore plus accru et couvrant le caractère crémeux, un peu soufré |
| L | plus piquant, connotation fromage atténuée, légèrement soufré |

Dans ce dernier cas, l'addition des ingrédients susmentionnés engendre une augmentation du caractère piquant du fromage de base, accompagnée d'un effet "mouthfeel" accru, mais qui n'est pas aussi évident que dans les deux autres types de "Cantadou" mentionnés plus haut. Ce sont en fait les notes piquantes et fraîches caractéristiques du raifort qui ressortent renforcées dans ce cas.

Exemple 21

Compositions aromatisantes de type céréales

On a ajouté à de l'eau de source les ingrédients suivants, dans les proportions indiquées, pour préparer des solutions aromatisées contenant les compositions aromatisantes A à H.

TABLEAU

| Ingrédient | Composition aromatisante (ppm) | | | | | | | |
|---|---|---|---|---|---|---|---|---|
| | A | B | C | D | E | F | G | H |
| Arôme de base* | 100 | 100 | 100 | 100 | 100 | 100 | 100 | 100 |
| Composé 3 | - | 1,0 | - | - | - | - | - | - |
| Composé 4 | - | - | 1,0 | - | - | - | - | - |
| Composé 5 | - | - | - | 1,0 | - | - | - | - |
| Composé 6 | - | - | - | - | 1,0 | - | - | - |
| Composé 11 | - | - | - | - | - | 1,0 | - | - |
| Composé 12 | - | - | - | - | - | - | 1,0 | - |
| Composé 13 | - | - | - | - | - | - | - | 1,0 |

* type céréales, 502.749 A ; origine : Firmenich SA, Genève, Suisse

Les solutions ainsi obtenues ont été soumises pour évaluation à l'aveugle à un panel d'experts aromaticiens, qui devaient indiquer leurs préférences du point de vue des qualités organoleptiques des solutions.
Les résultats de cette évaluation ont mis en évidence des modifications dans le profil organoleptique de l'arôme de base, en particulier dans le cas des compositions D, E, F, G et H, dont les solutions avaient un caractère chocolat accru et un meilleur impact dans la bouche.

Exemple 22

Compositions aromatisantes de type miel

On a ajouté à une solution sucrée à 10% les ingrédients suivants, dans les proportions indiquées.

TABLEAU

| Ingrédient | Composition aromatisante (ppm) | | | | | | | | |
|---|---|---|---|---|---|---|---|---|---|
| | A | B | C | D | E | F | G | H | I |
| Arôme de base* | 100 | 100 | 100 | 100 | 100 | 100 | 100 | 100 | 100 |

* type miel, 503.666 A ; origine : Firmenich SA, Genève, Suisse

TABLEAU (suite)

| Ingrédient | Composition aromatisante (ppm) | | | | | | | | |
|---|---|---|---|---|---|---|---|---|---|
| | A | B | C | D | E | F | G | H | I |
| Composé 3 | - | 1,0 | - | - | - | - | - | - | - |
| Composé 5 | - | - | 1,0 | - | - | - | - | - | - |
| Composé 6 | - | - | - | 1,0 | - | - | - | - | - |
| Composé 7 | - | - | - | - | 1,0 | - | - | - | - |
| Composé 11 | - | - | - | - | - | 1,0 | - | - | - |
| Composé 12 | - | - | - | - | - | - | 1,0 | - | - |
| Composé 13 | - | - | - | - | - | - | - | 1,0 | - |
| Composé 18 | - | - | - | - | - | - | - | - | 1,0 |

Lorsque les solutions ainsi obtenues ont été soumises pour évaluation à l'aveugle à un panel d'experts aromaticiens, des modifications remarquables dans le profil de l'arôme de base ont été constatées. Ainsi, les solutions B, D et F possédaient maintenant un goût où le caractère de type caramel était nettement renforcé par rapport à celui de l'arôme de base, alors que les compositions E, G et H possédaient un caractère floral accru et leur connotation rappelant le goût typique du phénylacétate était aussi devenue plus intense.

Exemple 23

Compositions aromatisantes de type alcoolisé

On a ajouté à une solution sucrée à 10% les ingrédients suivants, dans les proportions indiquées.

TABLEAU

| Ingrédient | Composition aromatisante (ppm) | | | | | | | |
|---|---|---|---|---|---|---|---|---|
| | A | B | C | D | E | F | G | H |
| Arôme de base* | 200 | 200 | 200 | 200 | 200 | 200 | 200 | 200 |
| Composé 2 | - | 1,0 | - | - | - | - | - | - |
| Composé 3 | - | - | 1,0 | - | - | - | - | - |
| Composé 7 | - | - | - | 1,0 | - | - | - | - |
| Composé 10 | - | - | - | - | 1,0 | - | - | - |
| Composé 11 | - | - | - | - | - | 1,0 | - | - |
| Composé 14 | - | - | - | - | - | - | 1,0 | - |
| Composé 18 | - | - | - | - | - | - | - | 1,0 |

* type rhum, 53.305 T ; origine : Firmenich SA, Genève, Suisse

Lors de l'évaluation à l'aveugle de ces compositions, les aromaticiens ont montré une préférence pour les compositions B à H par rapport à la composition A. Par ailleurs ils ont indiqué que lors de l'utilisation d'un arôme de base de type boisson alcoolisée comme celui susmentionné, on observait deux types de modifications dans le profil de cet arôme. Par exemple, les compositions C à E et G, H possédaient un caractère plus fermenté, alors que les compositions B et F étaient plus phénoliques que la composition A.

Exemple 24

Aromatisation de jus de fruits

On a ajouté à un jus de cassis, obtenu par simple dilution dans l'eau de source d'un jus concentré d'origine

commerciale, 5 ppm d'acide 2-oxo-butanoïque (composé 3). Lors de l'évaluation à l'aveugle du jus ainsi aromatisé, par rapport à la solution du jus commercial, le panel d'experts aromaticiens a exprimé une préférence pour le premier dont le goût avait une tonalité plus cuite, un peu confiture et réglisse.

Des essais similaires avec un jus de framboise, auquel on avait cependant ajouté 5 ppm d'acide 3-méthyl-2-oxo-pentanoïque (composé 5) et 5 ppm d'isoleucine, ont montré que le jus aromatisé selon l'invention avait une tonalité framboise beaucoup plus prononcée.

Exemple 25

Compositions aromatisantes à la vanilline

On a préparé une solution aqueuse de base contenant 10 ppm en poids de vanilline. Avec cette solution on a préparé des solutions nouvelles en ajoutant 1 ppm de composé 4 (solution A) et, respectivement 1 ppm de composé 7 (solution B). Les solutions A et B ont ensuite été comparées à l'aveugle avec celle de base par un panel d'experts aromaticiens, lesquels ont préféré les solutions A et B et qualifié leur caractère organoleptique comme suit, par rapport à celui de la solution de base :

TABLEAU

| Solution | Goût |
|---|---|
| A | plus douce, crémeuse, plus de "mouthfeel", plus pralinée, avec un caractère un peu plus gras. |
| B | un peu plus poudre, carton |

La solution A a été la plus appréciée. Par ailleurs, lorsqu'on a ajouté le sel de sodium du composé 4, à raison de 2 ppm, à la vanilline, on a observé des effets organoleptiques semblables à ceux constatés avec la solution A.

Exemple 26

Aromatisation de boissons au chocolat

On a préparé des boissons chocolatées en ajoutant 20 g d'une poudre de chocolat de type Nesquick® (Nestlé) à 200 ml de lait écrémé.
A cette boisson chocolatée de base on a ensuite ajouté les ingrédients suivants, dans les proportions indiquées.

| Ingrédient | Boisson aromatisée (ppm) | | | |
|---|---|---|---|---|
| | A | B | C | D |
| Arôme* | 1500 | 1500 | 1500 | 1500 |
| Composé 4 | 1,2 | 1,2 | - | - |
| Valine | - | 1,5 | - | - |
| Composé 5 | - | - | 1,2 | 1,2 |
| Isoleucine | - | - | - | 1,5 |

* type Firanova® chocolat, 570.090 TPL 0404; origine : Firmenich SA, Genève, Suisse

Ces quatre boissons ont ensuite été comparées à l'aveugle par un panel d'experts aromaticiens avec la boisson de base aromatisée à l'aide de 1500 ppm de l'arôme chocolat susmentionné. Les aromaticiens ont manifesté une préférence unanime pour les boissons aromatisées A à D, dont le goût a été jugé plus crémeux et arrondi, comme il ressort du tableau ci-après résumant les évaluations en termes descripteurs organoleptiques, par rapport à la boisson de base contenant uniquement l'arôme.

TABLEAU

| Boisson | Goût |
|---|---|
| A | plus riche, plus crémeux, plus doux dans les notes lactées |
| B | comme A, mais avec un caractère chocolat noir encore renforcé |

TABLEAU (suite)

| Boisson | Goût |
|---|---|
| C | notes lactées adoucies et caractère crémeux accru |
| D | de nouveau, un goût de type chocolat noir renforcé par rapport à C |

Exemple 27

Aromatisation de boissons au café

On a préparé des boissons au goût de café en ajoutant 12,5 g d'une poudre de café de type Nestlé® Cappucino à 150 ml d'eau chaude non-bouillante.
A cette boisson de base au café on a ensuite ajouté les ingrédients suivants, dans les proportions indiquées

| Ingrédient | Boisson aromatisée (ppm) | | | |
|---|---|---|---|---|
| | A | B | C | D |
| Arôme * | 1500 | 1500 | 1500 | 1500 |
| Composé 4 | 1,5 | 1,5 | - | - |
| Valine | - | 1,7 | - | - |
| Composé 5 | - | - | 1,5 | 1,5 |
| Isoleucine | - | - | - | 1,7 |

* type Firanova® cappucino, 570.092 TPL 0451; origine : Firmenich SA, Genève, Suisse

Ces quatre boissons ont ensuite été comparées à l'aveugle par un panel d'experts aromaticiens avec la boisson de base aromatisée à l'aide de 1500 ppm de l'arôme café susmentionné. Les aromaticiens ont manifesté une préférence unanime pour les boissons aromatisées A à D, dont le goût a été jugé plus onctueux et d'une perception de rémanence plus intense, comme il ressort du tableau ci-après résumant les évaluations en termes descripteurs organoleptiques, par rapport à la boisson de base contenant uniquement l'arôme.

TABLEAU

| Boisson | Goût |
|---|---|
| A | plus riche, plus crémeux et onctueux, effet plus durable dans la bouche |
| B | comme A, mais avec un caractère café noir encore renforcé |
| C | comme A |
| D | comme B |

Exemple 28

Composition aromatisante de type poulet

On a ajouté à une solution aqueuse saline à 0,5% de NaCl, les ingrédients suivants, dans les proportions relatives indiquées, pour préparer une solution de base aromatisée contenant la composition aromatisante constituée par ces ingrédients.

| Ingrédients | Parties en poids (ppm) |
|---|---|
| Isoeugénol | 1,0000 |
| p-Vinylguaiacol | 0,1000 |
| 2-Acétylpyrazine | 0,0050 |
| 2,3,5-Triméthylpyrazine | 0,0200 |
| 3-Ethyl-2-méthylpyrazine | 0,2500 |
| Sulfure de diméthyle | 2,0000 |

(suite)

| Ingrédients | Parties en poids (ppm) |
|---|---|
| Disulfure de diméthyle | 0,5000 |
| Disulfure de méthylpropyle | 0,0015 |
| Trisulfure de diméthyle | 0,0100 |
| 2-Méthylthiophenol | 2,0000 |
| 2-Octénal | 0,0050 |
| 2,4-Nonadiénal | 0,0050 |
| 2,4-Undécadiénal | 0,0050 |
| 2,4-Dodécadiénal | 0,0100 |

A cette solution de base, qui avait une note aromatique de type poulet, on a ajouté, à raison de 0,5 ppm, l'un des composés 3, 4, 5 ou 10, pour préparer des solutions aromatisées nouvelles. Lorsque celles-ci ont été dégustées par un panel d'experts aromaticiens et comparées avec la solution de base, il est apparu qu'elles possédaient un goût de poulet dont la rondeur et l'intensité étaient nettement accrues, par rapport à la solution de base. Par ailleurs, les aromaticiens ont également indiqué que le goût de ces solutions nouvelles était perçu pendant une durée de temps plus longue.
Des effets similaires ont d'ailleurs été constatés lorsque les propriétés d'un arôme fini de type poulet (504 303 TH ; origine : Firmenich SA, Genève, Suisse) ont été organoleptiquement modifiées par l'addition de l'un des acides mentionnés, ou encore du composé 18, à raison de 0,05% en poids.

Exemple 29

Compositions aromatisantes de type viande de boeuf

On a ajouté à une solution aqueuse saline à 0,5% de NaCl, les ingrédients suivants, clans les proportions relatives indiquées, pour préparer une solution de base aromatisée contenant la composition aromatisante constituée par ces ingrédients.

| Ingrédients | Parties en poids (ppm) |
|---|---|
| 2-Furanecarboxylate de méthyle | 1,00 |
| Furanéol ® | 0,40 |
| 2-Ethyl-3,5-diméthylpyrazine | 0,01 |
| Acide 10-undécénoïque redist. | 0,60 |
| Acide undécanoïque | 0,90 |
| Méthional | 0,035 |
| Furanéol ® | 0,030 |
| 2-Acétylpyrazine | 0,020 |
| 2-Ethyl-4-hydroxy-3-méthyl-5(2H)-furanone | 0,010 |
| Acide iso-décanoïque | 0,30 |
| Acide iso-nonanoïque | 0,15 |
| Acide 10-undécénoïque | 0,50 |
| Acide undécanoïque | 0,75 |
| Furanéol ® | 0,40 |
| 2,3,5-Triméthylpyrazine | 0,06 |
| 2,3-Diéthyl-5-méthylpyrazine | 0,03 |

L'addition de 5 ppm du composé 3, 5 ou 18 à cette solution de base a permis de bien renforcer le caractère viandeux et grillé de la composition de base, lui donnant aussi un impact accru dans la bouche.
Le même effet a d'ailleurs été observé lors de l'addition de l'un des acides susmentionnés à un arôme fini de type viande (573030 P ; origine: Firmenich SA, Genève, Suisse).

A cet effet, l'arôme de base (1000 ppm) et l'arôme nouveau obtenu par addition de 5 ppm d'acide ont été dégustés à l'aveugle dans des solutions salines telles que celles mentionnées précédemment.

Exemple 30

Composition aromatisante de type tomate

On a ajouté à une solution aqueuse saline à 0,5% de NaCl, les ingrédients suivants, dans les proportions relatives indiquées, pour préparer une solution de base aromatisée contenant la composition aromatisante constituée par ces ingrédients.

| Ingrédients | Parties en poids (ppm) |
|---|---|
| Acide octanoïque | 2,000 |
| 5-Dodécanolide | 0,300 |
| Méthional | 0,700 |
| 5-Méthylfurfural | 6,000 |
| Vanilline | 0,100 |
| Eugénol | 0,400 |
| Ortho-crésol | 0,020 |
| Guaiacol | 0,030 |
| Sulfure de diméthyle | 25,000 |
| Méthylmercaptan | 0,003 |

Avec cette solution aromatisée de base, on a préparé 3 solutions aromatisées nouvelles, en lui ajoutant 5 ppm du composé 3 (solution A), 5 ppm du composé 4 (solution B) et 5 ppm du composé 6 (solution C).
Les quatre solutions ont ensuite été évaluées à l'aveugle par un panel d'experts aromaticiens. Ces derniers ont unanimement préféré les solutions A, B et C à la solution de base, par rapport à laquelle la solution A était jugée d'un goût plus intense et rond, plus succulent, la solution B d'un caractère cuit plus prononcé et la solution C nettement plus juteuse et riche en caractère charnu ("fleshy").
Des effets similaires ont été observés lorqu'on a ajouté à un arôme fini de type tomate (502022 A ; origine : Firmenich SA, Genève, Suisse) les acides mentionnés à raison de 5% en poids.

Exemple 31

Composition aromatisante de type tomate

On a ajouté à une solution aqueuse saline à 0,5% de NaCl, les ingrédients suivants, dans les proportions relatives indiquées, pour préparer une solution de base aromatisée contenant la composition aromatisante constituée par ces ingrédients.

| Ingrédients | Parties en poids (ppm) |
|---|---|
| Acide butyrique | 1,00 |
| Acide isovalérianique | 1,50 |
| Acide octanoïque | 0,60 |
| Méthional | 1,30 |
| Sulfure de diméthyle | 40,00 |
| Méthylmercaptan | 0,03 |
| 3,4-Diméthyl-1,2-cyclopentanedione | 0,10 |
| Eugénol | 0,40 |
| 5-Méthylfurfural | 6,00 |
| Acétate d'isobutyle | 0,90 |
| Hexanal | 1,20 |

(suite)

| Ingrédients | Parties en poids (ppm) |
|---|---|
| 2-Hexénal | 0,50 |
| Benzoate de linalyle | 3,00 |
| Caproate de linalyle | 8,00 |
| 2-Buténoate d'hexyle | 0,40 |

Lorsqu'on a ajouté à cette solution de base 5 ppm du composé 5 on a obtenu une solution aromatisée nouvelle dont le goût tomateux avait beaucoup plus d'impact dans la bouche et était plus arrondi que celui de la solution de base. Ce composé modifiait de façon similaire le goût d'un arôme fini (tomate 502224 A ; origine : Firmenich SA, Genève, Suisse) dans lequel il avait été incorporé à raison de 5% en poids.

Exemple 32

Compositions aromatisantes de type fromage

On a ajouté à une solution aqueuse saline à 0,5% de NaCl, les ingrédients suivants, dans les proportions relatives indiquées, pour préparer une solution de base aromatisée contenant la composition aromatisante constituée par ces ingrédients.

| Ingrédients | Parties en poids (ppm) |
|---|---|
| Méthional | 0,45 |
| Sulfure de diméthyle | 0,45 |
| 3-(Méthylthio)-propionate de méthyle | 1,15 |
| 2-Heptanone | 0,75 |
| 2-Nonanone | 1,50 |
| δ-Décalactone | 0,75 |
| δ-Dodécalactone | 1,50 |
| Acide propionique | 27,75 |
| Acide butyrique | 30,00 |
| Acide isobutyrique | 4,50 |
| Acide pentanoïque | 7,50 |
| Acide isovalérianique | 2,25 |
| Acide caproïque | 12,00 |
| Acide caprylique | 12,00 |
| Acide caprique | 4,50 |

Lorsqu'on a ajouté à cette solution de base 0,5 ppm de l'un des composés 3, 4, 5, 10 ou 18, on a observé une amélioration de l'arôme et du goût de la solution, qui était devenu par la même plus arrondi et puissant, et d'un effet plus durable dans la bouche.

Exemple 33

Composition aromatisante de type céleri

On a ajouté à une solution aqueuse saline à 0,5% de NaCl, les ingrédients suivants, dans les proportions relatives indiquées, pour préparer une solution de base aromatisée contenant la composition aromatisante constituée par ces ingrédients.

| Ingrédients | Parties en poids (ppm) |
|---|---|
| 2,6-Nonadiénol | 0,0001 |
| cis-4-Hexénol | 4,0000 |
| Hexanal | 1,0000 |
| trans-2-Hexénal | 1,0000 |
| 3-Propylidène phtalide | 12,0000 |
| 3-n-Butylidène phtalide | 0,6000 |
| Essence de carotte | 0,8000 |
| Essence de céleri | 50,0000 |
| Essence de genièvre | 5,0000 |
| Essence de feuilles de livèche | 6,0000 |

L'addition à cette composition de base de 0,5 ppm de l'un des composés 3, 4, 5 ou 10 a fourni de nouvelles compositions aromatisantes dont le goût céleri était beaucoup plus riche et arrondi.

Exemple 34

Compositions aromatisantes de type chocolat

On a ajouté à de l'eau de source les ingrédients suivants, dans les proportions indiquées, pour préparer une solution de base aromatisée contenant la composition aromatisante constituée par ces ingrédients.

| Ingrédients | % en poids |
|---|---|
| Acide butyrique | 1,0 |
| Acide isobutyrique | 1,0 |
| Acide 2-méthylbutyrique | 1,0 |
| Acide isovalérianique | 1,0 |
| Acide 2-méthyl-caproïque | 1,0 |
| Aldéhyde isobutyrique | 2,0 |
| Aldéhyde isovalérianique | 0,5 |
| 5-Méthylfurfural | 2,5 |
| Alcool furfurylique | 3,0 |

L'addition à cette solution de base du composé 4, ou de son sel de sodium, à raison de 3 ppm, renforce le caractère beurré, et crémeux de la composition et la rend plus riche, tout en adoucissant les notes aldéhydées.

Exemple 35

Compositions aromatisantes de type lait caramel

On a ajouté à de l'eau de source les ingrédients suivants, dans les proportions indiquées, pour préparer une solution de base aromatisée contenant la composition aromatisante constituée par ces ingrédients.

| Ingrédients | % en poids |
|---|---|
| Mélange d'acides octanoïque et décanoïque | 7,5 |
| Vanilline | 7,5 |
| δ-Décalactone | 3,0 |
| 2-Furanecarboxylate de méthyle | 3,0 |
| Acétoïne | 2,5 |
| Furanéol® | 2,0 |

L'addition de 4 ppm du composé 4 à cette solution augmente les notes caramel "fudge" de la composition, ainsi que les notes lactées, et lui apporte aussi plus de douceur et de crémosité. Par ailleurs, le goût caramel de cette nouvelle composition persiste nettement plus dans la bouche.

Le même type d'effet organoleptique a été observé lorsqu'on a ajouté ce composé à un arôme fini de type lait caramel (502625 A; origine: Firmenich SA, Genève, Suisse).

Exemple 36

Compositions aromatisantes de type cassis édulcorées à l'Aspartame®

On a aromatisé une eau de source édulcorée avec 0,025% en poids d'Aspartame® et contenant 0,15% en poids d'acide citrique avec 50 ppm d'un arôme de type cassis, composé des ingrédients suivants

| Ingrédients | Parties en poids |
|---|---|
| 3-Hexén-1-ol | 5 |
| Essence de buchu | 2 |
| α-Ionone | 1 |
| 8-Mercapto-3-p-menthanone* | 15 |
| Eugénol | 2 |
| Sulfure de diméthyle | 30 |
| Maltol | 50 |
| p-Hydroxyphényl-2-butanone | 30 |
| Butyrate d'éthyle | 75 |
| Propylèneglycol | q. s |
| Total | 1000 |

* à 1% dans le propylèneglycol ; origine : Firmenich SA, Genève Suisse

A cette solution de base on a ajouté les composés 4, 13 et 17, à raison de 5 ppm, pour préparer 3 solutions aromatisées nouvelles.
Un panel d'experts aromaticiens a ensuite évalué à l'aveugle ces solutions, par rapport à la solution de base. De l'avis des aromaticiens, les trois solutions nouvelles étaient toutes préférées pour leur note cassis nettement plus juteuse et fruitée.
Les mêmes effets ont été constatés lorsqu'on a ajouté les acides susmentionnés à raison de 10 ppm en poids.

Des évaluations similaires ont été effectuées, dans des solutions aqueuses édulcorées à l'aide de 0,025% en poids d'Aspartame® et contenant 0,15% d'acide citrique, avec un arôme fini de base de type cassis (50 ppm ; 502009 A ; origine: Firmenich SA, Genève, Suisse), et un mélange de celui-ci avec 5 ppm du composé 13 (arôme A), 5 ppm du composé 17 (arôme B) ou 5 ppm du composé 4 ou de son sel de sodium (arôme C). De l'avis des aromaticiens, les arômes A, B et C avaient tous un goût plus fruité, juteux et plus confiture, aussi plus doux et arrondi, que l'arôme de base. Ils lui étaient d'ailleurs tous préférés.

Exemple 37

Compositions aromatisantes de type framboise édulcorées à l'Aspartame®

On a aromatisé une eau de source édulcorée avec 0,025% en poids d'Aspartame® et contenant 0,15% en poids d'acide citrique avec 100 ppm d'un arôme de type framboise, composé des ingrédients suivants.

| Ingrédients | Parties en poids |
|---|---|
| 3-Hexén-1-ol | 15 |
| Acétate d'éthyle | 75 |
| α-Ionone | 1 |
| Acétate d'isobutyle | 20 |
| Géraniol | 10 |

(suite)

| Ingrédients | Parties en poids |
|---|---|
| p-Hydroxyphényl-2-butanone | 75 |
| Propylèneglycol | q. s. |
| Total | 1000 |

A cette solution de base on a ajouté les composés 4, 13 et 17, à raison de 5 ppm en poids, pour préparer 3 solutions aromatisées nouvelles.
Un panel d'experts aromaticiens a ensuite évalué à l'aveugle ces solutions, par rapport à la solution de base. Les aromaticiens ont préféré les trois solutions nouvelles dont ils jugeaient la note fruitée et confiture nettement renforcée. Les mêmes effets ont été constatés lorsqu'on a ajouté les acides à raison de 10 ppm en poids.

Des évaluations similaires ont été effectuées, dans des solutions aqueuses édulcorées à l'aide de 0,025% en poids d'Aspartame® et contenant 0,15% d'acide citrique, avec un arôme fini de base de type framboise (100 ppm ; 52354/A ; origine : Firmenich SA, Genève, Suisse), et un mélange de celui-ci avec 5 ppm du composé 13 (arôme A), 5 ppm du composé 17 (arôme B) ou 5 ppm du composé 4 ou de son sel de sodium (arôme C). De l'avis des aromaticiens, les arômes A, B et C avaient tous un goût plus doux et plus confiture, aussi plus arrondi, que l'arôme de base et lui étaient tous préférés.

Exemple 38

Compositions aromatisantes de type orange

Une eau de source édulcorée avec 0,025% en poids d'Aspartame® et acidulée avec 0,15% en poids d'acide citrique a été aromatisée à l'aide de 100 ppm d'un arôme de type orange contenant les ingrédients suivants :

| Ingrédients | Parties en poids |
|---|---|
| Aldéhyde acétique | 30 |
| Hexanol | 3 |
| Dodécanol | 6 |
| Butyrate d'éthyle | 15 |
| Décanal à 10%* | 5 |
| Mélange de terpènes d'orange 1) | q.s. |
| Total | 1000 |

* dans un mélange de terpènes d'orange
1) origine : Firmenich SA, Genève, Suisse

On a ajouté à cette solution de base les composés 4, 13 et 17 à raison de 5 ppm en poids chacun, pour obtenir trois solutions nouvelles, lesquelles ont été évaluées à l'aveugle, avec la solution de base, par un panel d'experts aromaticiens. De l'avis de ces derniers, les trois solutions nouvelles avaient toutes un goût beaucoup plus juteux que la solution de base.

Exemple 39

Aromatisation de boissons de type Cola light

On a ajouté à une boisson de base de type Cola "light", c'est-à-dire allégée en sucre, d'origine commerciale, contenant des édulcorants artificiels (35,6 mg de Cyclamate de sodium, 12,5 mg d'Acesulfam® K et 12 mg d'Aspartame®, par 100 ml de boisson), respectivement 0,05 ppm de composé 5 (boisson A) et 0,05 ppm de composé 6.
Les boissons A et B, ainsi que la boisson de base, ont ensuite été comparées à l'aveugle par un panel d'experts aromaticiens. Ces derniers ont indiqué une préférence pour la boisson B en particulier, dont le goût était jugé plus puissant dans la note sucrée, laquelle "subsistait" dans la bouche nettement plus longtemps, par rapport à la solution de base. Des effets similaires ont d'ailleurs été constatés avec l'addition d'une proportion de 0,25 ppm en poids de

composé 6.
Quant à la boisson A, elle a aussi été préférée à la solution de base, son goût étant jugé plus volumineux, plus doux et plus citronné-lime que celui de la boisson de base. Le même effet a été observé lorsqu'on a ajouté le composé 5 à cette dernière dans une proportion de 0,5 ppm.

Exemple 40

Composition aromatisante

On a préparé une composition aromatisante selon l'invention en mélangeant en proportions molaires équivalentes les acides 4-méthyl-2-oxo-pentanoïque (composé 6), 3-méthyl-2-oxo-pentanoïque (composé 5), 2-oxo-3-phénylpropanoïque (composé 11), 4-(méthylthio)-2-oxo-butanoïque (composé 14) et 2-oxo-1H-indole-3-propanoïque (composé 13).
Lorsqu'on a ajouté, à raison de 3 ppm en poids, cette composition aromatisante à une boisson de type Cola "light" telle que citée à l'exemple précédent, on a obtenu une nouvelle boisson dont le goût était plus sucré et plus agréable que celui de la boisson d'origine, l'arrière-goût caractéristique des édulcorants artificiels ayant été nettement réduit.
Des tests ont également été effectués pour évaluer l'effet organoleptique de la même composition aromatisante sur des arômes de type fromage et beurre.
Pour ce faire, on a ajouté à une solution saline à 0,5% de NaCl 150 ppm en poids d'un arôme de type fromage (504 132 TH ; origine : Firmenich SA, Genève, Suisse). A cette solution de base aromatisée on a ensuite ajouté 1 ppm en poids de la composition aromatisante citée plus haut. La solution nouvelle ainsi obtenue et la solution de base ont ensuite été évaluées à l'aveugle par un panel d'experts aromaticiens. Le résultat de cette évaluation a montré une préférence unanime pour la solution nouvelle et les aromaticiens ont indiqué que le caractère crémeux de cette dernière se trouvait fortement renforcé par rapport à celui de la solution de base, les notes type "croûte" ayant également été quelque peu atténuées.
Lors d'essais similaires avec un arôme de type beurre (504 131 TH ; origine : Firmenich SA, Genève, Suisse), ajouté à raison de 50 ppm en poids, il a également été constaté que la composition aromatisante de l'invention (1 ppm) améliorait le goût de cet arôme, en lui conférant un caractère crémeux, beurré accru.

Exemple 41

Compositions aromatisantes de type thé

On a ajouté à de l'eau de source un arôme de base au goût de thé (502 911 T; 40 ppm en poids ; origine : Firmenich SA, Genève, Suisse) pour obtenir ainsi une solution de base aromatisée. Lorsqu'on a ajouté à cette solution de base 2 ppm en poids de composé 19, on a obtenu une nouvelle solution dont le caractère paille, feuilles sèches avait été renforcé.
D'autre part, le composé 20, ajouté dans la même proportion, apporte à l'arôme de base une note de type thé noir plus intense et renforce la rondeur de la composition et sa note herbacée légèrement fruitée.

Exemple 42

Compositions aromatisantes de type sucré

On a ajouté à un arôme de base de type imitation du goût de sucre (503 407 B ; origine : Firmenich SA, Genève, Suisse) à raison de 0,8% en poids du composé 4 ou de son sel de sodium. La composition nouvelle ainsi obtenue a ensuite été évaluée à l'aveugle par un panel d'experts aromaticiens. De l'avis de ces derniers, le goût sucré de la composition nouvelle était beaucoup plus riche, avec un caractère mélasse et caramel nettement renforcé par rapport à celui de l'arôme de base.
Cet effet enrichissant dans la note sucrée, mélasse, caramel a également pu être constaté lorsqu'on a ajouté le même composé 4 à un mélange de Furanéol® (12% en poids), vanilline (5% en poids) et maltol (2% en poids).

**Revendications**

1. Produit alimentaire sélectionné dans le groupe constitué par les produits allégés à faible teneur en graisses et les produits allégés en sucre, ledit produit comprenant une composition aromatisante artificielle contenante à titre d'ingrédient actif un ou plusieurs composés sélectionnés dans le groupe constitué par

(a) les α-céto-acides glyoxalique, 2-oxo-propanoïque, 2-oxo-butanoïque, 3-méthyl-2-oxo-butanoïque, 3-méthyl-2-oxo-pentanoïque, 4-méthyl-2-oxo-pentanoïque, 3-hydroxo-2-oxo-propanoïque, oxalacétique, 2-oxo-glutarique, 2-oxo-3-phényl-propanoïque, 3-(4-hydroxyphényl)-2-oxo-propanoïque, 2-oxo-1H-indole-3-propanoïque, 2-oxo-1H-imidazole-4-propanoïque, 4-méthylthio-2-oxo-butanoïque, 3-mercapto-2-oxo-propanoïque, 3-hydroxy-2-oxo-butanoïque, 6-amino-2-oxo-hexanoïque et 5-guanidino-2-oxo-pentanoïque, à l'état essentiellement pur; et
(b) les hydrates, les dérivés de type céto-énol, les sels comestibles de métaux alcalins, et les esters possédant un groupe alkyle saturé ou insaturé, linéaire ou ramifié, ayant de 1 a 4 atomes de carbone, desdits α-céto-acides,

ou d'un mélange d'au moins un des composés spécifiés sous (a) et (b) avec l'acide ou les acides aminés correspondants.

**2.** Produit alimentaire selon la revendication 1, comprenant un α-céto-acide sélectionné dans le groupe constitué par les acides 2-oxo-butanoïque, 3-méthyl-2-oxo-butanoïque, 3-hydroxy-2-oxo-propanoïque, 2-oxo-3-phényl-propanoïque, 3-méthyl-2-oxo-pentanoïque, 4-méthyl-2-oxo-pentanoïque, 4-(méthylthio)-2-oxo-butanoïque, 3-mercapto-2-oxo-propanoïque, 2-oxo-1H-indole-3-propanoïque ainsi que leurs hydrates , les dérivés de type céto-énol, les sels comestibles de métaux alcalins, et les esters possédant un groupe alkyle saturé ou insaturé, linéaire ou ramifié, ayant de 1 a 4 atomes de carbone.

**3.** Produit alimentaire selon la revendication 1 ou 2, **caractérisé en ce que** ledit ingrédient actif est constitué par un ou plusieurs desdits α-céto-acides ou leurs hydrates, dérivés de type céto-énol, sels comestibles de métaux alcalins, et esters possédant un groupe alkyle saturé ou insaturé, linéaire ou ramifié, ayant de 1 a 4 atomes de carbone, en combinaison avec un ou plusieurs acides aminés sélectionnés dans le groupe constitué par l'acide 2-amino-butanoïque, la glycine, l'α-alanine, la norvaline, la valine, l'acide aspartique, la norleucine, la leucine, l'isoleucine, la sérine, la thréonine, l'acide glutamique, la phénylalanine, la tyrosine, la cystéine, la méthionine, la glutamine, la théanine, l'asparagine, la cystine, la citrulline, l'acide γ-méthylène-glutamique, la lysine, le tryptophane, l'histidine, l'arginine et leurs sels alcalins.

**4.** Produit alimentaire selon la revendication 2, **caractérisé en ce que** ledit acide aminé ou son sel est présent dans une proportion en poids comprise entre 0,5 et 2 fois celui de l'α-céto-acide.

**5.** Produit alimentaire selon la revendication 1, sous forme d'un produit laitier.

**6.** Produit alimentaire selon la revendication 5, sous forme d'une margarine ou d'un dessert instantané.

**7.** Produit alimentaire selon la revendication 1, sous forme d'un aliment ou une boisson allégés en sucre.

**8.** Produit alimentaire selon la revendication 7, sous forme d'une boisson à base de cola.

**9.** Utilisation à titre d'ingrédient aromatisant d'un ou plusieurs ingrédients actifs sélectionnés dans le groupe constitué par

(a) les α-céto-acides glyoxalique, 2-oxo-propanoïque, 2-oxo-butanoïque, 3-méthyl-2-oxo-butanoïque, 3-méthyl-2-oxo-pentanoïque, 4-méthyl-2-oxo-pentanoïque, 3-hydroxo-2-oxo-propanoïque, oxalacétique, 2-oxo-glutarique, 2-oxo-3-phényl-propanoïque, 3-(4-hydroxyphényl)-2-oxo-propanoïque, 2-oxo-1H-indole-3-propanoïque, 2-oxo-1H-imidazole-4-propanoïque, 4-méthylthio-2-oxo-butanoïque, 3-mercapto-2-oxo-propanoïque, 3-hydroxy-2-oxo-butanoïque, 6-amino-2-oxo-hexanoïque et 5-guanidino-2-oxo-pentanoïque, à l'état essentiellement pur; et
(b) les hydrates, les dérivés de type céto-énol, les sels comestibles de métaux alcalins, et les esters possédant un groupe alkyle saturé ou insaturé, linéaire ou ramifié, ayant de 1 a 4 atomes de carbone, desdits α-céto-acides,

ou d'un mélange d'au moins un des composés spécifiés sous (a) et (b) avec l'acide ou les acides aminés correspondants
**caractérisée en ce qu'**on ajoute ledit composé à une composition aromatisante ou à un produit alimentaire, en quantité suffisante pour modifier l'impression gustative liée à la sensation en bouche d'une composition ou d'un aliment sélectionné dans le groupe constitué par les produits allégés à faible teneur en graisses, les applications

à caractère gustatif de type viandeux, les applications à caractère gustatif de type légumineux et les applications à caractère gustatif de type vanille ou céréales.

**10.** Utilisation selon la revendication 9, **caractérisée en ce que** le ou les ingredients actifs sont sélectionnés dans le groupe constitué par les acides 2-oxo-butanoïque, oxalacétique, 3-méthyl-2-oxo-butanoïque, 3-méthyl-2-oxo-pentanoïque, 2-oxo-glutarique et 3-mercapto-2-oxo-propanoïque, et ledit aliment est une application à caractère gustatif de type viandeux.

**11.** Utilisation selon la revendication 10, comprenant en plus l'addition d'un ou plusieurs composés sélectionnés dans le groupe constitué par l'isoeugénol, le 2-propylphénol, le p-vinylguaiacol, le 2-acétylpyrazine, le 2-éthyl-3,5-diméthylpyrazine, le 2,3,5-triméthylpyrazine, le 2,3-diéthyl-5-méthylpyrazine, le 3-éthyl-2-méthylpyrazine, le sulfure de diméthyle, le disulfure de diméthyle, le trisulfure de diméthyle, le disulfure de méthylpropyle, le 2-méthylthiophénol, le méthional (3-méthyl-thiopropanale), le 2-octénal, le 2,4-nonadiénal, le 2,4-décadiénal, le 2,4-undécadiénal, le 2-méthoxybenzalaldéhyde, le 2,4-dodécadiénal, le décénal, le 2-furanecarboxylate de méthyle, le 2-éthyl-4-hydroxy-3-méthyl-5(2H)-furanone, le 2,6-diméthylbenzènethiol, le 2-nonén-1-ol, l'acide undécanoïque, l'acide 10-undécanoïque, l'acide isodécanoïque et l'acide isononanoïque.

**12.** Utilisation selon la revendication 9, **caractérisée en ce que** le ou les ingredients actifs sont sélectionnés dans le groupe constitué par les acides 2-oxo-butanoïque, 3-méthyl-2-oxo-butanoïque, 3-méthyl-2-oxo-pentanoïque et 4-méthyl-2-oxo-pentanoïque et ledit aliment est une application à caractère gustatif de type légumineux.

**13.** Utilisation selon la revendication 12, **caractérisée en ce que** ledit aliment est une application à caractère gustatif de type tomate, asperge, maïs ou céleri.

**14.** Utilisation selon la revendication 9, **caractérisée en ce que** le ou les ingrédients actifs sont sélectionnés dans le groupe constitué par l'acide 3-méthyl-2-oxo-butanoïque et ses mélanges avec la valine et ledit aliment sont une application à caractère gustatif de type vanille ou céréales.

**15.** Utilisation selon la revendication 9, **caractérisée en ce que** ledit aliment est un produit laitier ou une margarine allégés.

**16.** Utilisation à titre d'ingrédient aromatisant d'un ou plusieurs ingrédients actifs sélectionnés dans le groupe constitué par

(a) les α-céto-acides glyoxalique, 2-oxo-propanoïque, 2-oxo-butanoïque, 3-méthyl-2-oxo-butanoïque, 3-méthyl-2-oxo-pentanoïque, 4-méthyl-2-oxo-pentanoïque, 3-hydroxo-2-oxo-propanoïque, oxalacétique, 2-oxo-glutarique, 2-oxo-3-phényl-propanoïque, 3-(4-hydroxyphényl)-2-oxo-propanoïque, 2-oxo-1H-indole-3-propanoïque, 2-oxo-1H-imidazole-4-propanoïque, 4-méthylthio-2-oxo-butanoïque, 3-mercapto-2-oxo-propanoïque, 3-hydroxy-2-oxo-butanoïque, 6-amino-2-oxo-hexanoïque et 5-guanidino-2-oxo-pentanoïque, à l'état essentiellement pur; et
(b) les hydrates, les dérivés de type céto-énol, les sels comestibles de métaux alcalins, et les esters possédant un groupe alkyle saturé ou insaturé, linéaire ou ramifié, ayant de 1 a 4 atomes de carbone, desdits α-céto-acides,

ou d'un mélange d'au moins un des composés spécifiés sous (a) et (b) avec l'acide ou les acides aminés correspondants
**caractérisée en ce qu'**on ajoute ledit composé à une composition aromatisante ou à un produit alimentaire, en quantité suffisante pour renforcer la sensation gustative sucrée d'une composition ou d'un aliment allégé en sucre.

**17.** Utilisation selon la revendication 16, **caractérisée en ce que** l'aliment contient un édulcorant artificiel.

**18.** Utilisation selon la revendication 16 ou 17, **caractérisée en ce que** le ou les ingredients actifs sont sélectionnés dans le groupe constitué par l'acide 3-méthyl-2-oxo-butanoïque et ses mélanges avec la L-valine, l'acide 3-méthyl-2-oxo-pentanoïque et ses mélanges avec la L-isoleucine, l'acide 2-oxo-glutarique et ses mélanges avec la L-glutamique, l'acide 2-oxo-butanoïque, l'acide 4-méthyl-2-oxo-pentanoïque, l'acide 3-hydroxy-2-oxo-butanoïque et ses mélanges avec la L-serine, l'acide 4-(méthylthio)-2-oxo-butanoïque, l'acide 2-oxo-1H-imidazole-4-propanoïque et l'acide 3-mercapto-2-oxo-propanoïque.

## Patentansprüche

1. Nahrungsmittelprodukt, ausgewählt aus der Gruppe bestehend aus leichten Produkten mit einem geringen Gehalt an Fetten und Produkten mit einem verringerten Zuckergehalt, wobei das Produkt eine künstliche Aromastoffzusammensetzung aufweist, welche als Aromastoff eine oder mehrere Verbindungen aufweist, die aus der Gruppe bestehend aus

    (a) den α-Ketosäuren Glyoxal-, 2-Oxopropan-, 2-Oxobutan-, 3-Methyl-2-oxobutan-, 3-Methyl-2-oxopentan-, 4-Methyl-2-oxopentan-, 3-Hydroxo-2-oxopropan-, Oxalessig-, 2-Oxoglutar-, 2-Oxo-3-phenylpropan-, 3-(4-Hydroxyphenyl)-2-oxopropan-, 2-Oxo1H-indol-3-propan-, 2-Oxo-1H-imidazol-4-propan-, 4-Methylthio-2-oxobutan-, 3-Mercapto-2-oxopropan-, 3-Hydroxy-2-oxobutan-, 6-Amino-2-oxohexan- und 5-Guanidin-2-oxopentansäure im wesentlichen im Reinzustand; und
    (b) den Hydraten, Derivaten vom Typ Keto-Enol, verzehrbaren Alkalimetallsalzen, und Estern mit einer gesättigten oder ungesättigten, geradkettigen oder verzweigten Alkylgruppe mit von 1 bis 4 Kohlenstoffatomen der genannten α-Ketosäuren ausgewählt sind,

    oder einer Mischung von mindestens einer der unter (a) und (b) genannten Verbindungen mit der entsprechenden Aminosäure bzw. den entsprechenden Aminosäuren.

2. Nahrungsmittelprodukt nach Anspruch 1, welches eine α -Ketosäure beinhaltet, die aus der Gruppe bestehend aus 2-Oxobutan-, 3-Methyl-2-oxobutan-, 3-Hydroxy-2-oxopropan-, 2-Oxo-3-phenylpropan-, 3-Methyl-2-oxopentan-, 4-Methyl-2-oxopentan-, 4-(Methylthio)-2-oxobutan-, 3-Mercapto-2-oxopropan-, 2-Oxo-1H-indol-3-propansäure sowie deren Hydraten, Derivaten vom Typ Keto-Enol, verzehrbaren Alkalimetallsalzen, und Estern mit einer gesättigten oder ungesättigten, geradkettigen oder verzweigten Alkylgruppe mit von 1 bis 4 Kohlenstoffatomen ausgewählt ist,

3. Nahrungsmittelprodukt nach Anspruch 1 oder 2, **dadurch gekennzeichnet, daß** der Aromastoff aus einer oder mehreren der α-Ketosäuren oder deren Hydraten, Derivaten vom Typ Keto-Enol, verzehrbaren Alkalimetallsalzen, und Estern mit einer gesättigten oder ungesättigten, geradkettigen oder verzweigten Alkylgruppe mit von 1 bis 4 Kohlenstoffatomen in Kombination mit einer oder mehreren Aminosäuren besteht, die aus der Gruppe bestehend aus 2-Amino-butansäure, Glycin, α-Alanin, Norvalin, Valin, Asparaginsäure, Norleucin, Leucin, Isoleucin, Serin, Threonin, Glutaminsäure, Phenylalanin, Tyrosin, Cystein, Methionin, Glutamin, Theanin, Asparagin, Cystin, Citrullin, γ-Methylenglutaminsäure, Lysin, Tryptophan, Histidin, Arginin und deren Alkalimetallsalzen ausgewählt sind.

4. Nahrungsmittelprodukt nach Anspruch 2, **dadurch gekennzeichnet, daß** die Aminosäure oder deren Salz in einem Gewichtsanteil von zwischen 0,5- und 2mal demjenigen der α-Ketosäure vorliegt.

5. Nahrungsmittelprodukt nach Anspruch 1 in Form eines Milchproduktes.

6. Nahrungsmittelprodukt nach Anspruch 5 in Form einer Margarine oder einer Instant-Nachspeise.

7. Nahrungsmittelprodukt nach Anspruch 1 in Form eines Nahrungsmittels oder Getränks mit einem verringerten Zuckergehalt.

8. Nahrungsmittelprodukt nach Anspruch 7 in Form eines Getränks auf Cola-Basis.

9. Verwendung als aromatisierender Inhaltsstoff von einem oder mehreren Aromastoffen, die aus der Gruppe bestehend aus

    (a) den α-Ketosäuren Glyoxal-, 2-Oxopropan-, 2-Oxobutan-, 3-Methyl-2-oxobutan-, 3-Methyl-2-oxopentan-, 4-Methyl-2-oxopentan-, 3-Hydroxo-2-oxopropan-, Oxalessig-, 2-Oxoglutar-, 2-Oxo-3-phenylpropan-, 3-(4-Hydroxyphenyl)-2-oxopropan-, 2-Oxo-1H-indol-3-propan-, 2-Oxo-1H-imidazol-4-propan-, 4-Methylthio-2-oxobutan-, 3-Mercapto-2-oxopropan-, 3-Hydroxy-2-oxobutan-, 6-Amino-2-oxohexanund 5-Guanidin-2-oxopentansäure im wesentlichen im Reinzustand; und
    (b) den Hydraten, Derivaten vom Typ Keto-Enol, verzehrbaren Alkalimetallsalzen, und Estern mit einer gesättigten oder ungesättigten, geradkettigen oder verzweigten Alkylgruppe mit von 1 bis 4 Kohlenstoffatomen der genannten α-Ketosäuren ausgewählt sind,

oder einer Mischung von mindestens einer der unter (a) und (b) genannten Verbindungen mit der entsprechenden Aminosäure bzw. den entsprechenden Aminosäuren,
**dadurch gekennzeichnet, daß** die Verbindung einer Aromastoffzusammensetzung oder einem Nahrungsmittelprodukt in einer Menge zugegeben wird, die ausreichend ist, um den Geschmackseindruck zu modifizieren, der mit dem "Mouthfeel" einer Zusammensetzung oder eines Lebensmittels in Zusammenhang steht, welche(s) aus der Gruppe bestehend aus leichten Produkten mit einem geringen Gehalt an Fetten, Anwendungen mit Geschmackscharakter vom Fleischtyp, Anwendungen mit Geschmackscharakter vom Gemüsetyp und Anwendungen mit Geschmackscharakter vom Typ Vanille oder Getreide ausgewählt sind.

**10.** Verwendung nach Anspruch 9, **dadurch gekennzeichnet, daß** der oder die Aromastoffe aus der Gruppe bestehend aus 2-Oxobutan-, Oxalessig-, 3-Methyl-2-oxobutan-, 3-Methyl-2-oxopentan-, 2-Oxoglutar- und 3-Mercapto-2-oxopropansäure ausgewählt sind, und das Lebensmittel eine Anwendung mit Geschmackscharakter vom Fleischtyp ist.

**11.** Verwendung nach Anspruch 10, des weiteren umfassend die Zugabe einer oder mehrerer Verbindungen, die aus der Gruppe bestehend aus Isoeugenol, 2-Propylphenol, *p*-Vinylguajacol, 2-Acetylpyrazin, 2-Ethyl-3,5-dimethylpyrazin, 2,3,5-Trimethylpyrazin, 2,3-Diethyl-5-methylpyrazin, 3-Ethyl-2-methylpyrazin, Dimethylsulfid, Dimethyldisulfid, Dimethyltrisulfid, Methylpropyldisulfid, 2-Methylthiophenol, Methional(3-methylthiopropanal), 2-Octenal, 2,4-Nonadienal, 2,4-Decadienal, 2,4-Undecadienal, 2-Methoxybenzaldehyd, 2,4-Dodecadienal, Decenal, Furan-2-carbonsäuremethylester, 2-Ethyl-4-hydroxy-3-methyl-5(2H)-furanon, 2,6-Dimethylbenzenthiol 2-Nonen-1-ol, Undecansäure, 10-Undecansäure, Isodecansäure und Isononansäure ausgewählt sind.

**12.** Verwendung nach Anspruch 9, **dadurch gekennzeichnet, daß** der oder die Aromastoffe aus der Gruppe bestehend aus 2-Oxobutan-, 3-Methyl-2-oxo-butan-, 3-Methyl-2-oxopentan- und 4-Methyl-2-oxopentansäure ausgewählt sind, und das Lebensmittel eine Anwendung mit Geschmackscharakter vom Gemüsetyp ist.

**13.** Verwendung nach Anspruch 12, **dadurch gekennzeichnet, daß** das Lebensmittel eine Anwendung mit Geschmackscharakter vom Typ Tomate, Spargel, Mais oder Sellerie ist.

**14.** Verwendung nach Anspruch 9, **dadurch gekennzeichnet, daß** der oder die Aromastoffe aus der Gruppe bestehend aus 3-Methyl-2-oxobutansäure sowie deren Mischungen mit Valin ausgewählt sind, und das Lebensmittel eine Anwendung mit Geschmackscharakter vom Typ Vanille oder Getreide ist.

**15.** Verwendung nach Anspruch 9, **dadurch gekennzeichnet, daß** das Lebensmittel ein leichtes Milchprodukt oder eine leichte Margarine ist.

**16.** Verwendung als aromatisierender Inhaltsstoff von einem oder mehreren Aromastoffen, die aus der Gruppe bestehend aus

(a) den α-Ketosäuren Glyoxal-, 2-Oxopropan-, 2-Oxobutan-, 3-Methyl-2-oxobutan-, 3-Methyl-2-oxopentan-, 4-Methyl-2-oxopentan-, 3-Hydroxo-2-oxopropan-, Oxalessig-, 2-Oxoglutar-, 2-Oxo-3-phenylpropan-, 3-(4-Hydroxyphenyl)-2-oxopropan-, 2-Oxo-1H-indol-3-propan-, 2-Oxo-1H-imidazol-4-propan-, 4-Methylthio-2-oxobutan-, 3-Mercapto-2-oxopropan-, 3-Hydroxy-2-oxobutan-, 6-Amino-2-oxohexan- und 5-Guanidin-2-oxopentansäure im wesentlichen im Reinzustand; und
(b) den Hydraten, Derivaten vom Typ Keto-Enol, verzehrbaren Alkalimetallsalzen, und Estern mit einer gesättigten oder ungesättigten, geradkettigen oder verzweigten Alkylgruppe mit von 1 bis 4 Kohlenstoffatomen der genannten α-Ketosäuren ausgewählt sind,

oder einer Mischung von mindestens einer der unter (a) und (b) genannten Verbindungen mit der entsprechenden Aminosäure bzw. den entsprechenden Aminosäuren,
**dadurch gekennzeichnet, daß** die Verbindung einer Aromastoffzusammensetzung oder einem Nahrungsmittelprodukt in einer Menge zugegeben wird, die ausreichend ist, um die zuckerartige Geschmacksempfindung einer Zusammensetzung oder eines Nahrungsmittels mit einem verringerten Zuckergehalt zu verstärken.

**17.** Verwendung nach Anspruch 16, **dadurch gekennzeichnet, daß** das Nahrungsmittel ein künstliches Süßungsmittel enthält.

**18.** Verwendung nach Anspruch 16 oder 17, **dadurch gekennzeichnet, daß** der oder die Aromastoffe aus der Gruppe

bestehend aus 3-Methyl-2-oxobutansäure und deren Mischungen mit L-Valin, 3-Methyl-2-oxopentansäure und deren Mischungen mit L-Isoleucin, 2-Oxoglutarsäure und deren Mischungen mit L-Glutamin, 2-Oxobutansäure, 4-Methyl-2-oxopentansäure, 3-Hydroxy-2-oxobutansäure und deren Mischungen mit L-Serin, 4-(Methylthio)-2-oxobutansäure, 2-Oxo-1H-imidazol-4-propansäure und 3-Mercapto-2-oxopropansäure ausgewählt sind.

## Claims

**1.** A food product selected from the group consisting of light products having a low fat or sugar content, said product comprising an artificial flavouring composition containing, as active ingredient, one or more compounds selected from the group consisting of

(a) the glyoxylic, 2-oxo-propanoic, 2-oxo-butanoic, 3-methyl-2-oxo-butanoic, 3-methyl-2-oxo-pentanoic, 4-methyl-2-oxo-pentanoic, 3-hydroxy-2-oxo-propanoic, oxalacetic, 2-oxo-glutaric, 2-oxo-3-phenyl-propanoic, 3-(4-hydroxyphenyl)-2-oxo-propanoic, 2-oxo-1H-indole-3-propanoic, 2-oxo-1H-imidazole-4-propanoic, 4-methylthio-2-oxo-butanoic, 3-mercapto-2-oxo-propanoic, 3-hydroxy-2-oxo-butanoic, 6-amino-2-oxo-hexanoic and 5-guanidino-2-oxo-pentanoic α-keto acids, in essentially pure form; and
(b) the hydrates, the keto-enolic derivatives, the edible alkaline metal salts and the esters having a saturated or unsaturated, linear or branched, alkyl group having from 1 to 4 carbon atoms, of said α-keto acids,

or of a mixture of at least one of the compounds specified in (a) and (b) with the corresponding amino acid or acids.

**2.** A food product according to claim 1, comprising an α-keto acid selected from the group consisting of the 2-oxo-butanoic, 3-methyl-2-oxo-butanoic, 3-hydroxy-2-oxo-propanoic, 2-oxo-3-phenyl-propanoic, 3-methyl-2-oxo-pentanoic, 4-methyl-2-oxo-pentanoic, 4-methylthio-2-oxo-butanoic, 3-mercapto-2-oxo-propanoic, 2-oxo-1H-indole-3-propanoic acids as well as their hydrates, keto-enolic derivatives, edible alkaline metal salts, and the esters having a saturated or unsaturated, linear or branched, alkyl group having from 1 to 4 carbon atoms.

**3.** A food product according to claim 1 or 2, **characterised in that** said active ingredient is formed of one or more of said α-keto acids or their hydrates, keto-enolic derivatives, edible alkaline metal salts and their esters having a saturated or unsaturated, linear or branched, alkyl group having from 1 to 4 carbon atoms, together with one or more amino acids selected from the group consisting of 2-amino-butanoic acid, glycine, α-alanine, norvaline, valine, aspartic acid, norleucine, leucine, isoleucine, serine, threonine, glutamic acid, phenylalanine, tyrosine, cysteine, methionine, glutamine, theanine, asparagine, cystine, citrulline, γ-methylene-glutamic acid lysine, tryptophane, histidine, arginine and their alkaline metal salts.

**4.** A food product according to claim 2, **characterised in that** said amino acid or its salt is present in a weight proportion comprised between 0.5 and 2 times that of the α-keto acid.

**5.** A food product according to claim 1, in the form of a dairy product.

**6.** A food product according to claim 5, in the form of a margarine or an instant dessert.

**7.** A food product according to claim 1, in the form of a sugar-light food or drink.

**8.** A food product according to claim 7, in the form of a cola-based drink.

**9.** Use as flavouring ingredient of one or more active ingredients selected from the group consisting of

(a) the glyoxylic, 2-oxo-propanoic, 2-oxo-butanoic, 3-methyl-2-oxo-butanoic, 3-methyl-2-oxo-pentanoic, 4-methyl-2-oxo-pentanoic, 3-hydroxy-2-oxo-propanoic, oxalacetic, 2-oxo-glutaric, 2-oxo-3-phenyl-propanoic, 3-(4-hydroxyphenyl)-2-oxo-propanoic, 2-oxo-1H-indole-3-propanoic, 2-oxo-1H-imidazole-4-propanoic, 4-methylthio-2-oxo-butanoic, 3-mercapto-2-oxo-propanoic, 3-hydroxy-2-oxo-butanoic, 6-amino-2-oxo-hexanoic and 5-guanidino-2-oxo-pentanoic α-keto acids, in essentially pure form; and
(b) the hydrates, the keto-enolic derivatives, the edible alkaline metal salts and the esters having a saturated or unsaturated, linear or branched, alkyl group having from 1 to 4 carbon atoms, of said α-keto acids,

or of a mixture of at least one of the compounds specified in (a) and (b) with the corresponding amino acid or acids,

**characterised in that** said compound is added to a flavouring composition or a food product in an amount sufficient to modify the gustative mouthfeel sensation of a composition or food product selected from the group consisting of light products having a low fat content, meat-flavoured applications, vegetable-flavoured applications and vanilla or cereal-flavoured applications.

**10.** Use according to claim 9, **characterised in that** the active ingredient or ingredients are selected from the group consisting of 2-oxo-butanoic, oxalacetic, 3-methyl-2-oxo-butanoic, 3-methyl-2-oxo-pentanoic, 2-oxo-glutaric and 3-mercapto-2-oxo-propanoic acids, and said food product is a meat-flavoured application.

**11.** Use according to claim 10, which further comprises the addition of one or more compounds selected from the group consisting of isoeugenol, 2-propylphenol, p-vinylguaiacol, 2-acetylpyrazine, 2-ethyl-3,5-dimethylpyrazine, 2,3,5-trimethylpyrazine, 2,3-diethyl-5-methylpyrazine, 3-ethyl-2-methylpyrazine, dimethyl sulphide, dimethyl disulphide, dimethyl trisulphide, methylpropyl disulphide, 2-methylthiophenol, methional (3-methyl-thiopropanal), 2-octenal, 2,4-nonadienal, 2,4-decadienal, 2,4-undecadienal, 2-methoxybenzaldehyde, 2,4-dodecadienal, decenal, methyl 2-furanecarboxylate, 2-ethyl-4-hydroxy-3-methyl-5(2H)-furanone, 2,6-dimethylbenzenethiol, 2-nonen-1-ol, undecanoic acid, 10-undecenoic acid, isodecanoic acid and isononanoic acid.

**12.** Use according to claim 9, **characterised in that** the active ingredient or ingredients are selected from the group consisting of 2-oxo-butanoic, 3-methyl-2-oxo-butanoic, 3-methyl-2-oxo-pentanoic, 4-methyl-2-oxo-pentanoic acids, and said food product is a vegetable-flavoured application.

**13.** Use according to claim 12, **characterised in that** said food product is a tomato, asparagus, corn or celery-flavoured application.

**14.** Use according to claim 9, **characterised in that** the active ingredient or ingredients are selected from the group consisting of 3-methyl-2-oxo-butanoic acid and its mixtures with valine, and said food product is a vanilla or cereal-flavoured application.

**15.** Use according to claim 9, **characterised in that** said food product is a dairy product or a light margarine.

**16.** Use as flavouring ingredient of one or more active ingredients selected from the group consisting of

(a) glyoxylic, 2-oxo-propanoic, 2-oxo-butanoic, 3-methyl-2-oxo-butanoic, 3-methyl-2-oxo-pentanoic, 4-methyl-2-oxo-pentanoic, 3-hydroxy-2-oxo-propanoic, oxalacetic, 2-oxo-glutaric, 2-oxo-3-phenyl-propanoic, 3-(4-hydroxyphenyl)-2-oxo-propanoic, 2-oxo-1H-indole-3-propanoic, 2-oxo-1H-imidazole-4-propanoic, 4-methylthio-2-oxo-butanoic, 3-mercapto-2-oxo-propanoic, 3-hydroxy-2-oxo-butanoic, 6-amino-2-oxo-hexanoic and 5-guanidino-2-oxo-pentanoic $\alpha$-keto acids, in essentially pure form; and
(b) the hydrates, the keto-enolic derivatives, the edible alkaline metal salts, and the esters having a saturated or unsaturated, linear or branched, alkyl group having from 1 to 4 carbon atoms, of said $\alpha$-keto acids,

or of a mixture of at least one of the compounds specified in (a) and (b) with the corresponding amino acid or acids, **characterised in that** said compound is added to a flavouring composition or a food product in an amount sufficient to enhance the sweet gustative sensation of a composition or food product having a low content in sugar.

**17.** Use according to claim 16, **characterised in that** said food product contains an artificial sweetener.

**18.** Use according to claim 16 or 17, **characterised in that** the active ingredient or ingredients are selected from the group consisting of 3-methyl-2-oxo-butanoic acid and its mixtures with L-valine, 3-methyl-2-oxo-pentanoic acid and its mixtures with L-isoleucine, 2-oxo-glutaric acid and its mixtures with L- glutamic acid, 2-oxo-butanoic acid, 4-methyl-2-oxo-pentanoic acid, 3-hydroxy-2-oxo-butanoic acid and its mixtures with L-serine, 4-methylthio-2-oxo-butanoic acid, 2-oxo-1H-imidazole-4-propanoic acid and 3-mercapto-2-oxo-propanoic acid.